(19)

**Europäisches Patentamt**

**European Patent Office**

**Office européen des brevets**

(11)     **EP 3 827 401 B1**

(12)                          **EUROPEAN PATENT SPECIFICATION**

(45) Date of publication and mention
of the grant of the patent:
**09.08.2023   Bulletin 2023/32**

(21) Application number: **19841158.9**

(22) Date of filing: **22.07.2019**

(51) International Patent Classification (IPC):
*G06Q 50/02* (2012.01)     *A01B 79/00* (2006.01)
*A01C 21/00* (2006.01)     *G01C 21/00* (2006.01)
*G06Q 10/04* (2023.01)     *G06Q 10/06* (2023.01)

(52) Cooperative Patent Classification (CPC):
**G06Q 10/067; A01B 79/005; A01G 7/00;
G06Q 10/04; G06Q 10/06; G06Q 50/02**

(86) International application number:
**PCT/US2019/042828**

(87) International publication number:
**WO 2020/023392 (30.01.2020 Gazette 2020/05)**

(54) **GENERATING AGRONOMIC YIELD MAPS FROM FIELD HEALTH IMAGERY**

ERZEUGUNG AGRONOMISCHER ERTRAGSKARTEN AUS FELDGESUNDHEITSBILDERN

GÉNÉRATION DE CARTES DE RENDEMENT AGRONOMIQUE À PARTIR D'UNE IMAGERIE DE
SANTÉ DE CHAMP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **26.07.2018   US 201862703798 P**

(43) Date of publication of application:
**02.06.2021   Bulletin 2021/22**

(73) Proprietor: **Climate LLC**
**St. Louis, Missouri 63141 (US)**

(72) Inventors:
  • **DUMSTORFF, Patrick Lee**
    **San Francisco, California 94103 (US)**
  • **LEE, Wayne Tai**
    **San Francisco, California 94103 (US)**
  • **KHADKA, Pramithus**
    **San Francisco, California 94103 (US)**
  • **KREIG, Alex Raymond**
    **San Francisco, California 94103 (US)**
  • **MARLOW, Michael Peter**
    **San Francisco, California 94103 (US)**

  • **LYONS, Michael Joseph**
    **San Francisco, California 94103 (US)**
  • **BLASIAK, Dariusz Andrzej**
    **San Francisco, California 94103 (US)**
  • **SMOOT, Seth Robert**
    **San Francisco, California 94103 (US)**
  • **BONES, Tavis Easton**
    **San Francisco, California 94103 (US)**
  • **PLATTNER, Kyle**
    **San Francisco, California 94103 (US)**
  • **JOHANNESSON, Gardar**
    **San Francisco, California 94103 (US)**

(74) Representative: **BIP Patents**
**c/o Bayer Intellectual Property GmbH**
**Alfred-Nobel-Straße 50**
**40789 Monheim am Rhein (DE)**

(56) References cited:
**US-A1- 2004 002 368     US-A1- 2016 073 573
US-A1- 2017 089 742     US-A1- 2017 131 254
US-A1- 2018 027 725     US-A1- 2018 027 725
US-A1- 2018 042 174     US-B1- 7 058 197**

**Description**

COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright or rights whatsoever.

FIELD OF THE DISCLOSURE

The present disclosure relates to computer systems useful in climatology and agricultural. The disclosure relates more specifically to computer systems that are programmed or configured to generate pixel maps identifying agronomic yield values for an agronomic field based on field health imagery maps.

BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Agronomic yield maps are invaluable to farmers. Agronomic yield maps allow a farmer to identify variations in agronomic fields that cause changes in the agronomic yield of a crop. Agronomic yield maps can also be required for digital modeling of agronomic fields or for the generation of scripts which, when executed, cause. For instance, many prescription map generators use prior field agronomic yield maps to create seeding prescriptions for a current year.

Generally, to create an agronomic yield map, one or more devices are utilized to measure the agronomic yield at each location on the agronomic field. For instance, some combines come equipped with sensors configured to weigh a crop as it is being harvested, thereby providing measurements of the agronomic yield across the field.

Unfortunately, as machinery has become more efficient, it also becomes less useful for generating yield maps. Combines that have a width of sixteen rows are able to harvest a large amount of a crop efficiently but are unable to provide yield variation data at a finer resolution than the resolution at which they are harvesting. Additionally, fields may lack combines with measurement capabilities or experience malfunctions with the combines that cause the measurements to be inaccurate or absent.

When yield maps are unavailable at high resolutions, the uses of the yield maps become more limited.

If the resolution of the yield map is limited to sixteen rows of a crop, then an agronomic prescription can only be created at a resolution of sixteen rows. Thus, the ability of a computer system to generate row-by-row prescriptions can be stymied by a lack of row-by-row yield data.

Additionally, many uses of agronomic yield maps require the agronomic yield maps to be based on universal inputs, such as similar treatments across an agronomic field. Farmers will often apply different treatments across the field to identify the benefits or detriments associated with those treatments. For instance, a farmer may apply large amounts of a nutrient to one portion of a field to determine the maximum effect the nutrient can have on crop growth.

While experiments provide valuable data, the differences in crop yield between the experimental portions of the agronomic field and the remainder of the agronomic field are usually a result of the experiment and not a result of differences in the field. Thus, in creating a prescription based on in-field difference, the experimental portions of the agronomic field may skew the computations, thereby creating a prescription map which assumes in-field differences that do not exist.

Thus, there is a need for a system which can generate high resolution yield maps without measurements of yield at each location on the map. Additionally, there is a need for a system which can generate a yield map based on uniform treatment of a crop across an agronomic field even when uniform treatment was not received. US 2016/073573 A1 refers to a method that involves receiving multiple field definition data. Multiple input data is retrieved from multiple data networks. A field region is determined based on the field definition data. A subset of multiple input data associated with the field region is identified. Multiple field condition data is determined based on the subset of the multiple input data. Multiple field condition data is provided to a user device.US 2018/027725 A1 refers to a device that has processors for receiving first information associated with an emergence area, determining an actual commodity quantity value based on imagery data, determining an emergence value associated with the emergence area, and receiving second information associated with a commodity. The processors determine conditions based on the second information and the emergence value, determine a recommendation based on the conditions, and provide the recommendation to permit and/or cause an action to be performed in association with the emergence area

SUMMARY

The appended claims may serve as a summary of the disclosure.

BRIEF DESCRIPTION OF THE DRAWINGS

In the drawings:

FIG. 1 illustrates an example computer system that is configured to perform the functions described herein, shown in a field environment with other apparatus with which the system may interoperate.

FIG. 2 illustrates two views of an example logical organization of sets of instructions in main memory when an example mobile application is loaded for execution.

FIG. 3 illustrates a programmed process by which the agricultural intelligence computer system generates one or more preconfigured agronomic models using agronomic data provided by one or more data sources.

FIG. 4 is a block diagram that illustrates a computer system upon which an embodiment of the invention may be implemented.

FIG. 5 depicts an example embodiment of a timeline view for data entry.

FIG. 6 depicts an example embodiment of a spreadsheet view for data entry.

FIG. 7 depicts a method of generating yield maps using imagery-based maps.

FIG. 8 depicts an example of generating a uniform yield map where multiple parts of the field received different treatments.

FIG. 9 depicts an example graphical user interface for generating yield maps using imagery-based maps.

DETAILED DESCRIPTION

In the following description, for the purposes of explanation, numerous specific details are set forth in order to provide a thorough understanding of the present disclosure. It will be apparent, however, that embodiments may be practiced without these specific details. In other instances, well-known structures and devices are shown in block diagram form in order to avoid unnecessarily obscuring the present disclosure. Embodiments are disclosed in sections according to the following outline:

1. GENERAL OVERVIEW
2. EXAMPLE AGRICULTURAL INTELLIGENCE COMPUTER SYSTEM

    2.1. STRUCTURAL OVERVIEW
    2.2. APPLICATION PROGRAM OVERVIEW
    2.3. DATA INGEST TO THE COMPUTER SYSTEM
    2.4. PROCESS OVERVIEW-AGRONOMIC MODEL TRAINING
    2.5. IMPLEMENTATION EXAMPLE-HARDWARE OVERVIEW

3. GENERATING YIELD MAPS

    3.1. YIELD MAP UNIFORMITY
    3.2. EXAMPLE GRAPHICAL USER INTERFACE IMPLEMENTATION
    3.3. YIELD MAP USAGE

4. BENEFITS OF CERTAIN EMBODIMENTS
5. EXTENSIONS AND ALTERNATIVES

1. GENERAL OVERVIEW

Systems and methods for generating yield maps based on field health imagery maps are described herein. In an embodiment, an agricultural intelligence computer system receives field health imagery maps which comprise one or more images of a field, maps derived from one or more images of a field, or maps generated using in-field sensors. The agricultural intelligence computer system additionally receives data identifying an average agronomic yield of the agronomic field. Using the field health imagery map, the agricultural intelligence computer system generates a spatial distribution of agronomic yield based, at least in part, on the average yield value. The agricultural intelligence computer system then uses the spatial distribution of agronomic yield to generate an agronomic yield map.

In an embodiment, a method comprises receiving a field health imagery map for a particular agronomic field; receiving data describing a total harvested mass of a crop on the particular agronomic field; computing an average yield for a plurality of locations on the particular agronomic field; using the field health imagery map, generating a spatial distribution of agronomic yield based, at least in part, on the average yield; and generating a yield map using the spatial distribution of agronomic yield.

2. EXAMPLE AGRICULTURAL INTELLIGENCE COMPUTER SYSTEM

2.1 STRUCTURAL OVERVIEW

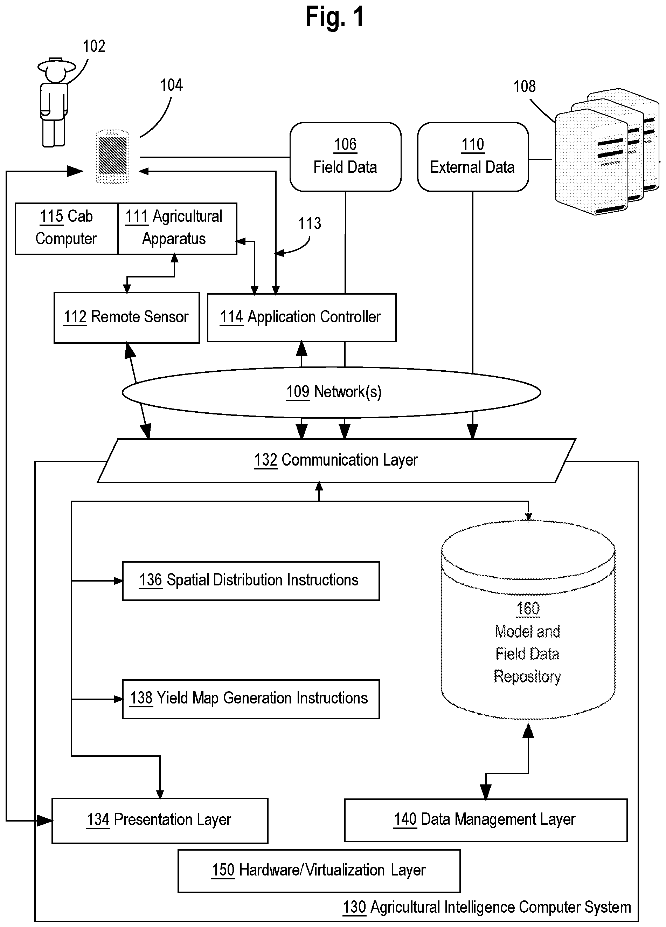

FIG. 1 illustrates an example computer system that is configured to perform the functions described herein, shown in a field environment with other apparatus with which the system may interoperate. In one embodiment, a user 102 owns, operates or possesses a field manager computing device 104 in a field location or associated with a field location such as a field intended for agricultural activities or a management location for one or more agricultural fields. The field manager computer device 104 is programmed or configured to provide field data 106 to an agricultural intelligence computer system 130 via one or more networks 109.

Examples of field data 106 include (a) identification data (for example, acreage, field name, field identifiers, geographic identifiers, boundary identifiers, crop identifiers, and any other suitable data that may be used to identify farm land, such as a common land unit (CLU), lot and block number, a parcel number, geographic coordinates and boundaries, Farm Serial Number (FSN), farm number, tract number, field number, section, township, and/or range), (b) harvest data (for example, crop type, crop variety, crop rotation, whether the crop is grown organically, harvest date, Actual Production History (APH), expected yield, yield, crop price, crop revenue, grain moisture, tillage practice, and previous growing season information), (c) soil data (for example, type, composition, pH, organic matter (OM), cation exchange capacity (CEC)), (d) planting data (for example, planting date, seed(s) type, relative maturity (RM) of planted seed(s), seed population), (e) fertilizer data (for example, nutrient type (Nitrogen, Phosphorous, Potassium), application type, application date, amount, source, method), (f) chemical application data (for example, pesticide, herbicide, fungicide, other substance or mixture of substances intended for use as a plant regulator, defoliant, or desiccant, application date, amount, source, method), (g) irrigation data (for example, application date, amount, source, method), (h) weather data (for example, precipitation, rainfall rate, predicted rainfall, water runoff rate region, temperature, wind, forecast, pressure, visibility, clouds, heat index, dew point, humidity, snow depth, air quality, sunrise, sunset), (i) imagery data (for example, imagery and light spectrum information from an agricultural apparatus sensor, camera, computer, smartphone, tablet, unmanned aerial vehicle, planes or satellite), (j) scouting observations (photos, videos, free form notes, voice recordings, voice transcriptions, weather conditions (temperature, precipitation (current and over time), soil moisture, crop growth stage, wind velocity, relative humidity, dew point, black layer)), and (k) soil, seed, crop phenology, pest and disease reporting, and predictions sources and databases.

A data server computer 108 is communicatively coupled to agricultural intelligence computer system 130 and is programmed or configured to send external data 110 to agricultural intelligence computer system 130 via the network(s) 109. The external data server computer 108 may be owned or operated by the same legal person or entity as the agricultural intelligence computer system 130, or by a different person or entity such as a government agency, non-governmental organization (NGO), and/or a private data service provider. Examples of external data include weather data, imagery data, soil data, or statistical data relating to crop yields, among others. External data 110 may consist of the same type of information as field data 106. In some embodiments, the external data 110 is provided by an external data server 108 owned by the same entity that owns and/or operates the agricultural intelligence computer system 130. For example, the agricultural intelligence computer system 130 may include a data server focused exclusively on a type of data that might otherwise be obtained from third party sources, such as weather data. In some embodiments, an external data server 108 may actually be incorporated within the system 130.

An agricultural apparatus 111 may have one or more remote sensors 112 fixed thereon, which sensors are communicatively coupled either directly or indirectly via agricultural apparatus 111 to the agricultural intelligence computer system 130 and are programmed or configured to send sensor data to agricultural intelligence computer system 130. Examples of agricultural apparatus 111 include tractors, combines, harvesters, planters, trucks, fertilizer equipment, aerial vehicles including unmanned aerial vehicles, and any other item of physical machinery or hardware, typically mobile machinery, and which may be used in tasks associated with agriculture. In some embodiments, a single unit of apparatus 111 may comprise a plurality of sensors 112 that are coupled locally in a network on the apparatus; controller area network (CAN) is example of such a network that can be installed in combines, harvesters, sprayers, and cultivators. Application controller 114 is communicatively coupled to agricultural intelligence computer system 130 via the network(s) 109 and is programmed or configured to receive one or more scripts that are used to control an operating parameter of an agricultural vehicle or implement from the agricultural intelligence computer system 130. For instance, a controller area network (CAN) bus interface may be used to enable communications from the agricultural intelligence computer system 130 to the agricultural apparatus 111, such as how the CLIMATE FIELD VIEW DRIVE, available from The Climate Corporation, San Francisco, California, is used. Sensor data may consist of the same type of information as field data 106. In some embodiments, remote sensors 112 may not be fixed to an agricultural apparatus 111 but may be remotely located in the field and may communicate with network 109.

The apparatus 111 may comprise a cab computer 115 that is programmed with a cab application, which may comprise a version or variant of the mobile application for device 104 that is further described in other sections herein. In an embodiment, cab computer 115 comprises a compact computer, often a tablet-sized computer or smartphone, with a graphical screen display, such as a color display, that is mounted within an operator's cab of the apparatus 111. Cab computer 115 may implement some or all of the operations and functions that are described further herein for the mobile computer device 104.

The network(s) 109 broadly represent any combination of one or more data communication networks including local area networks, wide area networks, internetworks or internets, using any of wireline or wireless links, including terrestrial or satellite links. The network(s) may be implemented by any medium or mechanism that provides for the exchange of data between the various elements of FIG. 1. The various elements of FIG. 1 may also have direct (wired or wireless) communications links. The sensors 112, controller 114, external data server computer 108, and other elements of the system each comprise an interface compatible with the network(s) 109 and are programmed or configured to use standardized protocols for communication across the networks such as TCP/IP, Bluetooth, CAN protocol and higher-layer protocols such as HTTP, TLS, and the like.

Agricultural intelligence computer system 130 is programmed or configured to receive field data 106 from field manager computing device 104, external data 110 from external data server computer 108, and sensor data from remote sensor 112. Agricultural intelligence computer system 130 may be further configured to host, use or execute one or more computer programs, other software elements, digitally programmed logic such as FPGAs or ASICs, or any combination thereof to perform translation and storage of data values, construction of digital models of one or more crops on one or more fields, generation of recommendations and notifications, and generation and sending of scripts to application controller 114, in the manner described further in other sections of this disclosure.

In an embodiment, agricultural intelligence computer system 130 is programmed with or comprises a communication layer 132, presentation layer 134, data management layer 140, hardware/virtualization layer 150, and model and field data repository 160. "Layer," in this context, refers to any combination of electronic digital interface circuits, microcontrollers, firmware such as drivers, and/or computer programs or other software elements.

Communication layer 132 may be programmed or configured to perform input/output interfacing functions including sending requests to field manager computing device 104, external data server computer 108, and remote sensor 112 for field data, external data, and sensor data respectively. Communication layer 132 may be programmed or configured to send the received data to model and field data repository 160 to be stored as field data 106.

Presentation layer 134 may be programmed or configured to generate a graphical user interface (GUI) to be displayed on field manager computing device 104, cab computer 115 or other computers that are coupled to the system 130 through the network 109. The GUI may comprise controls for inputting data to be sent to agricultural intelligence computer system 130, generating requests for models and/or recommendations, and/or displaying recommendations, notifications, models, and other field data.

Data management layer 140 may be programmed or configured to manage read operations and write operations involving the repository 160 and other functional elements of the system, including queries and result sets communicated between the functional elements of the system and the repository. Examples of data management layer 140 include JDBC, SQL server interface code, and/or HADOOP interface code, among others. Repository 160 may comprise a database. As used herein, the term "database" may refer to either a body of data, a relational database management system (RDBMS), or to both. As used herein, a database may comprise any collection of data including hierarchical databases, relational databases, flat file databases, object-relational databases, object oriented databases, distributed databases, and any other structured collection of records or data that is stored in a computer system. Examples of RDBMS's include, but are not limited to including, ORACLE®, MYSQL, IBM® DB2, MICROSOFT® SQL SERVER, SYBASE®, and POSTGRESQL databases. However, any database may be used that enables the systems and methods described herein.

When field data 106 is not provided directly to the agricultural intelligence computer system via one or more agricultural machines or agricultural machine devices that interacts with the agricultural intelligence computer system, the user may be prompted via one or more user interfaces on the user device (served by the agricultural intelligence computer system) to input such information. In an example embodiment, the user may specify identification data by accessing a map on the user device (served by the agricultural intelligence computer system) and selecting specific CLUs that have been graphically shown on the map. In an alternative embodiment, the user 102 may specify identification data by accessing a map on the user device (served by the agricultural intelligence computer system 130) and drawing boundaries of the field over the map. Such CLU selection or map drawings represent geographic identifiers. In alternative embodiments, the user may specify identification data by accessing field identification data (provided as shape files or in a similar format) from the U. S. Department of Agriculture Farm Service Agency or other source via the user device and providing such field identification data to the agricultural intelligence computer system.

In an example embodiment, the agricultural intelligence computer system 130 is programmed to generate and cause displaying a graphical user interface comprising a data manager for data input. After one or more fields have been identified using the methods described above, the data manager may provide one or more graphical user interface widgets which when selected can identify changes to the field, soil, crops, tillage, or nutrient practices. The data manager may include a timeline view, a spreadsheet view, and/or one or more editable programs.

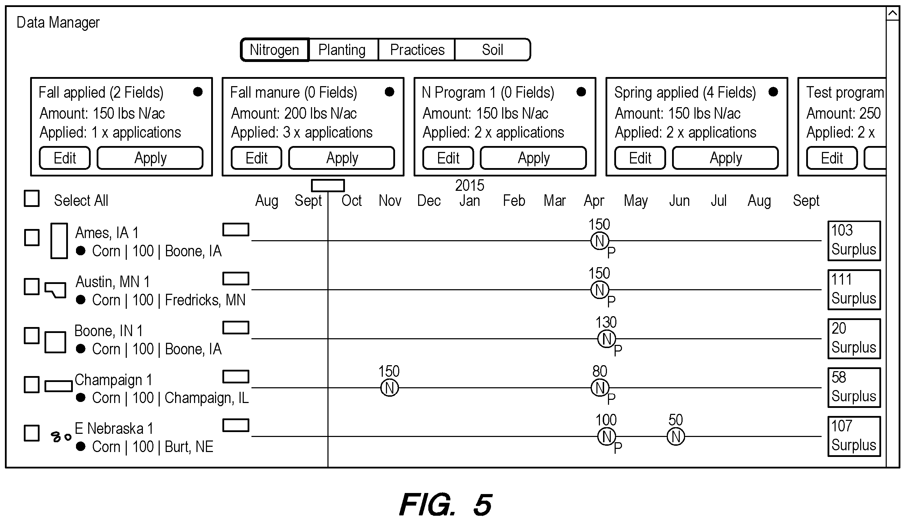

FIG. 5 depicts an example embodiment of a timeline view for data entry. Using the display depicted in FIG. 5, a user computer can input a selection of a particular field and a particular date for the addition of event. Events depicted at the top of the timeline may include Nitrogen, Planting, Practices, and Soil. To add a nitrogen application event, a user computer may provide input to select the nitrogen tab. The user computer may then select a location on the timeline for a particular field in order to indicate an application of nitrogen on the selected field. In response to receiving a selection of a location on the timeline for a particular field, the data manager may display a data entry overlay, allowing the user computer to input data pertaining to nitrogen applications, planting procedures, soil application, tillage procedures, irrigation practices, or other information relating to the particular field. For example, if a user computer selects a portion of the timeline and indicates an application of nitrogen, then the data entry overlay may include fields for inputting an amount of nitrogen applied, a date of application, a type of fertilizer used, and any other information related to the application of nitrogen.

In an embodiment, the data manager provides an interface for creating one or more programs. "Program," in this context, refers to a set of data pertaining to nitrogen applications, planting procedures, soil application, tillage procedures, irrigation practices, or other information that may be related to one or more fields, and that can be stored in digital data storage for reuse as a set in other operations. After a program has been created, it may be conceptually applied to one or more fields and references to the program may be stored in digital storage in association with data identifying the fields. Thus, instead of manually entering identical data relating to the same nitrogen applications for multiple different fields, a user computer may create a program that indicates a particular application of nitrogen and then apply the program to multiple different fields. For example, in the timeline view of FIG. 5, the top two timelines have the "Spring applied" program selected, which includes an application of 150 lbs. N/ac in early April. The data manager may provide an interface for editing a program. In an embodiment, when a particular program is edited, each field that has selected the particular program is edited. For example, in FIG. 5, if the "Spring applied" program is edited to reduce the application of nitrogen to 130 lbs. N/ac, the top two fields may be updated with a reduced application of nitrogen based on the edited program.

In an embodiment, in response to receiving edits to a field that has a program selected, the data manager removes the correspondence of the field to the selected program. For example, if a nitrogen application is added to the top field in FIG. 5, the interface may update to indicate that the "Spring applied" program is no longer being applied to the top field. While the nitrogen application in early April may remain, updates to the "Spring applied" program would not alter the April application of nitrogen.

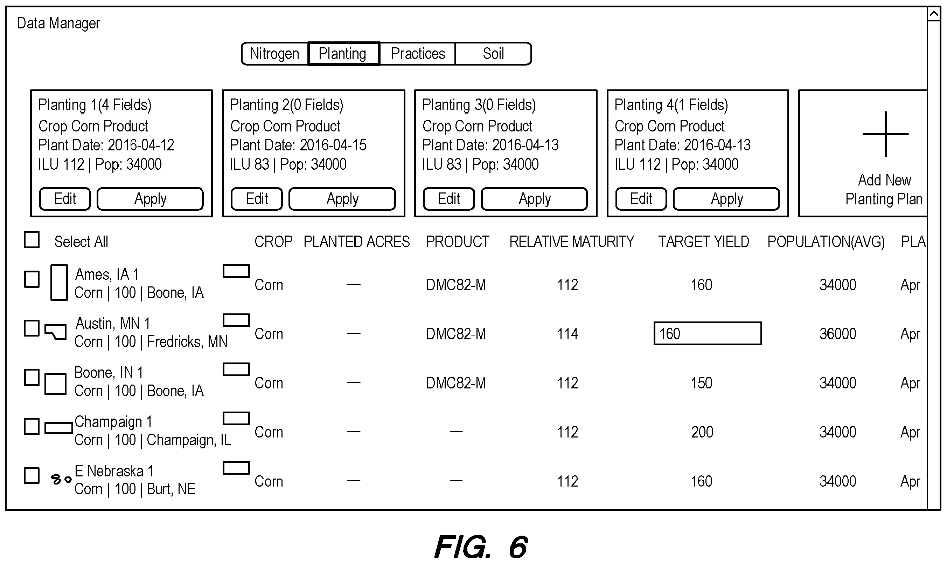

FIG. 6 depicts an example embodiment of a spreadsheet view for data entry. Using the display depicted in FIG. 6, a user can create and edit information for one or more fields. The data manager may include spreadsheets for inputting information with respect to Nitrogen, Planting, Practices, and Soil as depicted in FIG. 6. To edit a particular entry, a user computer may select the particular entry in the spreadsheet and update the values. For example, FIG. 6 depicts an in-progress update to a target yield value for the second field. Additionally, a user computer may select one or more fields in order to apply one or more programs. In response to receiving a selection of a program for a particular field, the data manager may automatically complete the entries for the particular field based on the selected program. As with the timeline view, the data manager may update the entries for each field associated with a particular program in response to receiving an update to the program. Additionally, the data manager may remove the correspondence of the selected program to the field in response to receiving an edit to one of the entries for the field.

In an embodiment, model and field data is stored in model and field data repository 160. Model data comprises data models created for one or more fields. For example, a crop model may include a digitally constructed model of the development of a crop on the one or more fields. "Model," in this context, refers to an electronic digitally stored set of executable instructions and data values, associated with one another, which are capable of receiving and responding to a programmatic or other digital call, invocation, or request for resolution based upon specified input values, to yield one or more stored or calculated output values that can serve as the basis of computer-implemented recommendations, output data displays, or machine control, among other things. Persons of skill in the field find it convenient to express models using mathematical equations, but that form of expression does not confine the models disclosed herein to abstract concepts; instead, each model herein has a practical application in a computer in the form of stored executable instructions and data that implement the model using the computer. The model may include a model of past events on the one or more fields, a model of the current status of the one or more fields, and/or a model of predicted events on the one or more fields. Model and field data may be stored in data structures in memory, rows in a database table, in flat files or spreadsheets, or other forms of stored digital data.

In an embodiment, each of spatial distribution instructions 136 and yield map generation instructions 138 comprises a set of one or more pages of main memory, such as RAM, in the agricultural intelligence computer system 130 into which executable instructions have been loaded and which when executed cause the agricultural intelligence computing system to perform the functions or operations that are described herein with reference to those modules. For example, the spatial distribution instructions 136 may comprise a set of pages in RAM that contain instructions which when executed cause performing the spatial distribution generation functions that are described herein. The instructions may be in machine executable code in the instruction set of a CPU and may have been compiled based upon source code written in JAVA, C, C++, OBJECTIVE-C, or any other human-readable programming language or environment, alone or in combination with scripts in JAVASCRIPT, other scripting languages and other programming source text. The term "pages" is intended to refer broadly to any region within main memory and the specific terminology used in a system may vary depending on the memory architecture or processor architecture. In another embodiment, each of spatial distribution instructions 136 and yield map generation instructions 138 also may represent one or more files or projects of source code that are digitally stored in a mass storage device such as non-volatile RAM or disk storage, in the agricultural intelligence computer system 130 or a separate repository system, which when compiled or interpreted cause generating executable instructions which when executed cause the agricultural intelligence computing system to perform the functions or operations that are described herein with reference to those modules. In other words, the drawing figure may represent the manner in which programmers or software developers organize and arrange source code for later compilation into an executable, or interpretation into bytecode or the equivalent, for execution by the agricultural intelligence computer system 130.

Spatial distributions instructions 136 comprise computer-readable instructions which, when executed by one or more processors, cause agricultural intelligence computer system 130 to generate a spatial distribution of an average yield value based on relative field health imagery values in a field healthy imagery map. Yield map generation instructions 138 comprise computer-readable instructions which, when executed by one or more processors, cause agricultural intelligence computer system 130 to generate a yield map using the spatial distribution of the average yield value.

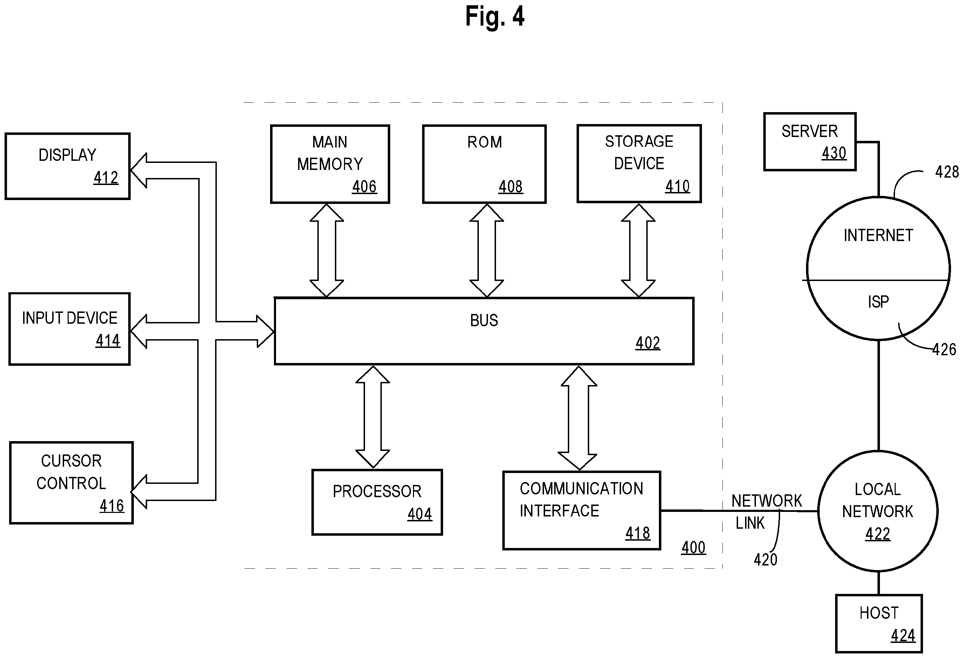

Hardware/virtualization layer 150 comprises one or more central processing units (CPUs), memory controllers, and other devices, components, or elements of a computer system such as volatile or non-volatile memory, non-volatile storage such as disk, and I/O devices or interfaces as illustrated and described, for example, in connection with FIG. 4. The layer 150 also may comprise programmed instructions that are configured to support virtualization, containerization, or other technologies.

For purposes of illustrating a clear example, FIG. 1 shows a limited number of instances of certain functional elements. However, in other embodiments, there may be any number of such elements. For example, embodiments may use thousands or millions of different mobile computing devices 104 associated with different users. Further, the system 130 and/or external data server computer 108 may be implemented using two or more processors, cores, clusters, or instances of physical machines or virtual machines, configured in a discrete location or co-located with other elements in a datacenter, shared computing facility or cloud computing facility.

2.2. APPLICATION PROGRAM OVERVIEW

In an embodiment, the implementation of the functions described herein using one or more computer programs or other software elements that are loaded into and executed using one or more general-purpose computers will cause the general-purpose computers to be configured as a particular machine or as a computer that is specially adapted to perform the functions described herein. Further, each of the flow diagrams that are described further herein may serve, alone or in combination with the descriptions of processes and functions in prose herein, as algorithms, plans or directions that may be used to program a computer or logic to implement the functions that are described. In other words, all the prose text herein, and all the drawing figures, together are intended to provide disclosure of algorithms, plans or directions that are sufficient to permit a skilled person to program a computer to perform the functions that are described herein, in combination with the skill and knowledge of such a person given the level of skill that is appropriate for inventions and disclosures of this type.

In an embodiment, user 102 interacts with agricultural intelligence computer system 130 using field manager computing device 104 configured with an operating system and one or more application programs or apps; the field manager computing device 104 also may interoperate with the agricultural intelligence computer system independently and automatically under program control or logical control and direct user interaction is not always required. Field manager computing device 104 broadly represents one or more of a smart phone, PDA, tablet computing device, laptop computer, desktop computer, workstation, or any other computing device capable of transmitting and receiving information and performing the functions described herein. Field manager computing device 104 may communicate via a network using a mobile application stored on field manager computing device 104, and in some embodiments, the device may be coupled using a cable 113 or connector to the sensor 112 and/or controller 114. A particular user 102 may own, operate or possess and use, in connection with system 130, more than one field manager computing device 104 at a time.

The mobile application may provide client-side functionality, via the network to one or more mobile computing devices. In an example embodiment, field manager computing device 104 may access the mobile application via a web browser or a local client application or app. Field manager computing device 104 may transmit data to, and receive data from, one or more front-end servers, using web-based protocols or formats such as HTTP, XML and/or JSON, or app-specific protocols. In an example embodiment, the data may take the form of requests and user information input, such as field data, into the mobile computing device. In some embodiments, the mobile application interacts with location tracking hardware and software on field manager computing device 104 which determines the location of field manager computing device 104 using standard tracking techniques such as multilateration of radio signals, the global positioning system (GPS), WiFi positioning systems, or other methods of mobile positioning. In some cases, location data or other data associated with the device 104, user 102, and/or user account(s) may be obtained by queries to an operating system of the device or by requesting an app on the device to obtain data from the operating system.

In an embodiment, field manager computing device 104 sends field data 106 to agricultural intelligence computer system 130 comprising or including, but not limited to, data values representing one or more of: a geographical location of the one or more fields, tillage information for the one or more fields, crops planted in the one or more fields, and soil data extracted from the one or more fields. Field manager computing device 104 may send field data 106 in response to user input from user 102 specifying the data values for the one or more fields. Additionally, field manager computing device 104 may automatically send field data 106 when one or more of the data values becomes available to field manager computing device 104. For example, field manager computing device 104 may be communicatively coupled to remote sensor 112 and/or application controller 114 which include an irrigation sensor and/or irrigation controller. In response to receiving data indicating that application controller 114 released water onto the one or more fields, field manager computing device 104 may send field data 106 to agricultural intelligence computer system 130 indicating that water was released on the one or more fields. Field data 106 identified in this disclosure may be input and communicated using electronic digital data that is communicated between computing devices using parameterized URLs over HTTP, or another suitable communication or messaging protocol.

A commercial example of the mobile application is CLIMATE FIELDVIEW, commercially available from The Climate Corporation, San Francisco, California. The CLIMATE FIELD VIEW application, or other applications, may be modified, extended, or adapted to include features, functions, and programming that have not been disclosed earlier than the filing date of this disclosure. In one embodiment, the mobile application comprises an integrated software platform that allows a grower to make fact-based decisions for their operation because it combines historical data about the grower's fields with any other data that the grower wishes to compare. The combinations and comparisons may be performed in real time and are based upon scientific models that provide potential scenarios to permit the grower to make better, more informed decisions.

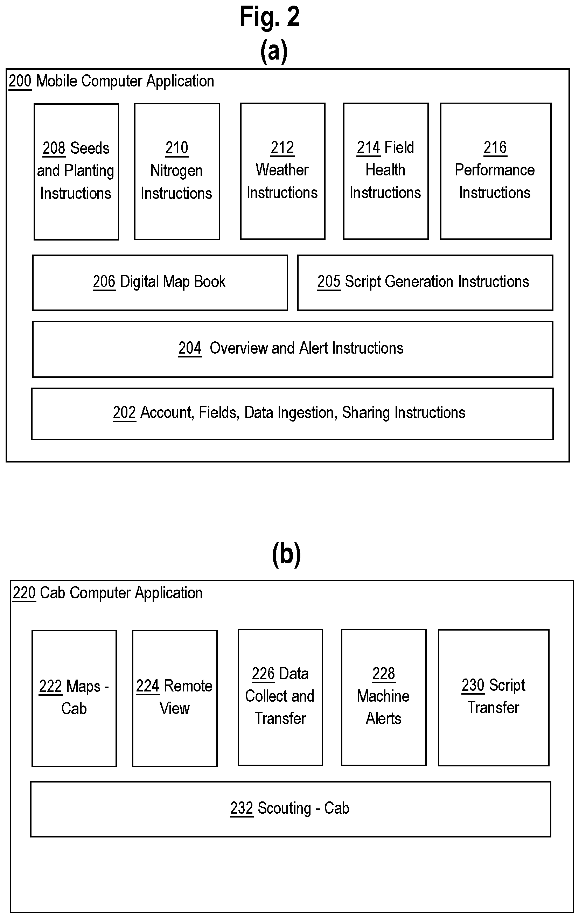

FIG. 2 illustrates two views of an example logical organization of sets of instructions in main memory when an example mobile application is loaded for execution. In FIG. 2, each named element represents a region of one or more pages of RAM or other main memory, or one or more blocks of disk storage or other non-volatile storage, and the programmed instructions within those regions. In one embodiment, in view (a), a mobile computer application 200 comprises account-fields-data ingestion-sharing instructions 202, overview and alert instructions 204, digital map book instructions 206, seeds and planting instructions 208, nitrogen instructions 210, weather instructions 212, field health instructions 214, and performance instructions 216.

In one embodiment, a mobile computer application 200 comprises account, fields, data ingestion, sharing instructions 202 which are programmed to receive, translate, and ingest field data from third party systems via manual upload or APIs. Data types may include field boundaries, yield maps, as-planted maps, soil test results, as-applied maps, and/or management zones, among others. Data formats may include shape files, native data formats of third parties, and/or farm management information system (FMIS) exports, among others. Receiving data may occur via manual upload, e-mail with attachment, external APIs that push data to the mobile application, or instructions that call APIs of external systems to pull data into the mobile application. In one embodiment, mobile computer application 200 comprises a data inbox. In response to receiving a selection of the data inbox, the mobile computer application 200 may display a graphical user interface for manually uploading data files and importing uploaded files to a data manager.

In one embodiment, digital map book instructions 206 comprise field map data layers stored in device memory and are programmed with data visualization tools and geospatial field notes. This provides growers with convenient information close at hand for reference, logging and visual insights into field performance. In one embodiment, overview and alert instructions 204 are programmed to provide an operation-wide view of what is important to the grower, and timely recommendations to take action or focus on particular issues. This permits the grower to focus time on what needs attention, to save time and preserve yield throughout the season. In one embodiment, seeds and planting instructions 208 are programmed to provide tools for seed selection, hybrid placement, and script creation, including variable rate (VR) script creation, based upon scientific models and empirical data. This enables growers to maximize yield or return on investment through optimized seed purchase, placement and population.

In one embodiment, script generation instructions 205 are programmed to provide an interface for generating scripts, including variable rate (VR) fertility scripts. The interface enables growers to create scripts for field implements, such as nutrient applications, planting, and irrigation. For example, a planting script interface may comprise tools for identifying a type of seed for planting. Upon receiving a selection of the seed type, mobile computer application 200 may display one or more fields broken into management zones, such as the field map data layers created as part of digital map book instructions 206. In one embodiment, the management zones comprise soil zones along with a panel identifying each soil zone and a soil name, texture, drainage for each zone, or other field data. Mobile computer application 200 may also display tools for editing or creating such, such as graphical tools for drawing management zones, such as soil zones, over a map of one or more fields. Planting procedures may be applied to all management zones or different planting procedures may be applied to different subsets of management zones. When a script is created, mobile computer application 200 may make the script available for download in a format readable by an application controller, such as an archived or compressed format. Additionally, and/or alternatively, a script may be sent directly to cab computer 115 from mobile computer application 200 and/or uploaded to one or more data servers and stored for further use.

In one embodiment, nitrogen instructions 210 are programmed to provide tools to inform nitrogen decisions by visualizing the availability of nitrogen to crops. This enables growers to maximize yield or return on investment through optimized nitrogen application during the season. Example programmed functions include displaying images such as SSURGO images to enable drawing of fertilizer application zones and/or images generated from subfield soil data, such as data obtained from sensors, at a high spatial resolution (as fine as millimeters or smaller depending on sensor proximity and resolution); upload of existing grower-defined zones; providing a graph of plant nutrient availability and/or a map to enable tuning application(s) of nitrogen across multiple zones; output of scripts to drive machinery; tools for mass data entry and adjustment; and/or maps for data visualization, among others. "Mass data entry," in this context, may mean entering data once and then applying the same data to multiple fields and/or zones that have been defined in the system; example data may include nitrogen application data that is the same for many fields and/or zones of the same grower, but such mass data entry applies to the entry of any type of field data into the mobile computer application 200. For example, nitrogen instructions 210 may be programmed to accept definitions of nitrogen application and practices programs and to accept user input specifying to apply those programs across multiple fields. "Nitrogen application programs," in this context, refers to stored, named sets of data that associates: a name, color code or other identifier, one or more dates of application, types of material or product for each of the dates and amounts, method of application or incorporation such as injected or broadcast, and/or amounts or rates of application for each of the dates, crop or hybrid that is the subject of the application, among others. "Nitrogen practices programs," in this context, refer to stored, named sets of data that associates: a practices name; a previous crop; a tillage system; a date of primarily tillage; one or more previous tillage systems that were used; one or more indicators of application type, such as manure, that were used. Nitrogen instructions 210 also may be programmed to generate and cause displaying a nitrogen graph, which indicates projections of plant use of the specified nitrogen and whether a surplus or shortfall is predicted; in some embodiments, different color indicators may signal a magnitude of surplus or magnitude of shortfall. In one embodiment, a nitrogen graph comprises a graphical display in a computer display device comprising a plurality of rows, each row associated with and identifying a field; data specifying what crop is planted in the field, the field size, the field location, and a graphic representation of the field perimeter; in each row, a timeline by month with graphic indicators specifying each nitrogen application and amount at points correlated to month names; and numeric and/or colored indicators of surplus or shortfall, in which color indicates magnitude.

In one embodiment, the nitrogen graph may include one or more user input features, such as dials or slider bars, to dynamically change the nitrogen planting and practices programs so that a user may optimize his nitrogen graph. The user may then use his optimized nitrogen graph and the related nitrogen planting and practices programs to implement one or more scripts, including variable rate (VR) fertility scripts. Nitrogen instructions 210 also may be programmed to generate and cause displaying a nitrogen map, which indicates projections of plant use of the specified nitrogen and whether a surplus or shortfall is predicted; in some embodiments, different color indicators may signal a magnitude of surplus or magnitude of shortfall. The nitrogen map may display projections of plant use of the specified nitrogen and whether a surplus or shortfall is predicted for different times in the past and the future (such as daily, weekly, monthly or yearly) using numeric and/or colored indicators of surplus or shortfall, in which color indicates magnitude. In one embodiment, the nitrogen map may include one or more user input features, such as dials or slider bars, to dynamically change the nitrogen planting and practices programs so that a user may optimize his nitrogen map, such as to obtain a preferred amount of surplus to shortfall. The user may then use his optimized nitrogen map and the related nitrogen planting and practices programs to implement one or more scripts, including variable rate (VR) fertility scripts. In other embodiments, similar instructions to the nitrogen instructions 210 could be used for application of other nutrients (such as phosphorus and potassium), application of pesticide, and irrigation programs.

In one embodiment, weather instructions 212 are programmed to provide field-specific recent weather data and forecasted weather information. This enables growers to save time and have an efficient integrated display with respect to daily operational decisions.

In one embodiment, field health instructions 214 are programmed to provide timely remote sensing images highlighting in-season crop variation and potential concerns. Example programmed functions include cloud checking, to identify possible clouds or cloud shadows; determining nitrogen indices based on field images; graphical visualization of scouting layers, including, for example, those related to field health, and viewing and/or sharing of scouting notes; and/or downloading satellite images from multiple sources and prioritizing the images for the grower, among others.

In one embodiment, performance instructions 216 are programmed to provide reports, analysis, and insight tools using on-farm data for evaluation, insights and decisions. This enables the grower to seek improved outcomes for the next year through fact-based conclusions about why return on investment was at prior levels, and insight into yield-limiting factors. The performance instructions 216 may be programmed to communicate via the network(s) 109 to back-end analytics programs executed at agricultural intelligence computer system 130 and/or external data server computer 108 and configured to analyze metrics such as yield, yield differential, hybrid, population, SSURGO zone, soil test properties, or elevation, among others. Programmed reports and analysis may include yield variability analysis, treatment effect estimation, benchmarking of yield and other metrics against other growers based on anonymized data collected from many growers, or data for seeds and planting, among others.

Applications having instructions configured in this way may be implemented for different computing device platforms while retaining the same general user interface appearance. For example, the mobile application may be programmed for execution on tablets, smartphones, or server computers that are accessed using browsers at client computers. Further, the mobile application as configured for tablet computers or smartphones may provide a full app experience or a cab app experience that is suitable for the display and processing capabilities of cab computer 115. For example, referring now to view (b) of FIG. 2, in one embodiment a cab computer application 220 may comprise maps-cab instructions 222, remote view instructions 224, data collect and transfer instructions 226, machine alerts instructions 228, script transfer instructions 230, and scouting-cab instructions 232. The code base for the instructions of view (b) may be the same as for view (a) and executables implementing the code may be programmed to detect the type of platform on which they are executing and to expose, through a graphical user interface, only those functions that are appropriate to a cab platform or full platform. This approach enables the system to recognize the distinctly different user experience that is appropriate for an in-cab environment and the different technology environment of the cab. The maps-cab instructions 222 may be programmed to provide map views of fields, farms or regions that are useful in directing machine operation. The remote view instructions 224 may be programmed to turn on, manage, and provide views of machine activity in real-time or near real-time to other computing devices connected to the system 130 via wireless networks, wired connectors or adapters, and the like. The data collect and transfer instructions 226 may be programmed to turn on, manage, and provide transfer of data collected at sensors and controllers to the system 130 via wireless networks, wired connectors or adapters, and the like. The machine alerts instructions 228 may be programmed to detect issues with operations of the machine or tools that are associated with the cab and generate operator alerts. The script transfer instructions 230 may be configured to transfer in scripts of instructions that are configured to direct machine operations or the collection of data. The scouting-cab instructions 232 may be programmed to display location-based alerts and information received from the system 130 based on the location of the field manager computing device 104, agricultural apparatus 111, or sensors 112 in the field and ingest, manage, and provide transfer of location-based scouting observations to the system 130 based on the location of the agricultural apparatus 111 or sensors 112 in the field.

## 2.3. DATA INGEST TO THE COMPUTER SYSTEM

In an embodiment, external data server computer 108 stores external data 110, including soil data representing soil composition for the one or more fields and weather data representing temperature and precipitation on the one or more fields. The weather data may include past and present weather data as well as forecasts for future weather data. In an embodiment, external data server computer 108 comprises a plurality of servers hosted by different entities. For example, a first server may contain soil composition data while a second server may include weather data. Additionally, soil composition data may be stored in multiple servers. For example, one server may store data representing percentage of sand, silt, and clay in the soil while a second server may store data representing percentage of organic matter (OM) in the soil.

In an embodiment, remote sensor 112 comprises one or more sensors that are programmed or configured to produce one or more observations. Remote sensor 112 may be aerial sensors, such as satellites, vehicle sensors, planting equipment sensors, tillage sensors, fertilizer or insecticide application sensors, harvester sensors, and any other implement capable of receiving data from the one or more fields. In an embodiment, application controller 114 is programmed or configured to receive instructions from agricultural intelligence computer system 130. Application controller 114 may also be programmed or configured to control an operating parameter of an agricultural vehicle or implement. For example, an application controller may be programmed or configured to control an operating parameter of a vehicle, such as a tractor, planting equipment, tillage equipment, fertilizer or insecticide equipment, harvester equipment, or other farm implements such as a water valve. Other embodiments may use any combination of sensors and controllers, of which the following are merely selected examples.

The system 130 may obtain or ingest data under user 102 control, on a mass basis from a large number of growers who have contributed data to a shared database system. This form of obtaining data may be termed "manual data ingest" as one or more user-controlled computer operations are requested or triggered to obtain data for use by the system 130. As an example, the CLIMATE FIELD VIEW application, commercially available from The Climate Corporation, San Francisco, California, may be operated to export data to system 130 for storing in the repository 160.

For example, seed monitor systems can both control planter apparatus components and obtain planting data, including signals from seed sensors via a signal harness that comprises a CAN backbone and point-to-point connections for registration and/or diagnostics. Seed monitor systems can be programmed or configured to display seed spacing, population and other information to the user via the cab computer 115 or other devices within the system 130. Examples are disclosed in US Pat. No. 8,738,243 and US Pat. Pub. 20150094916, and the present disclosure assumes knowledge of those other patent disclosures.

Likewise, yield monitor systems may contain yield sensors for harvester apparatus that send yield measurement data to the cab computer 115 or other devices within the system 130. Yield monitor systems may utilize one or more remote sensors 112 to obtain grain moisture measurements in a combine or other harvester and transmit these measurements to the user via the cab computer 115 or other devices within the system 130.

In an embodiment, examples of sensors 112 that may be used with any moving vehicle or apparatus of the type described elsewhere herein include kinematic sensors and position sensors. Kinematic sensors may comprise any of speed sensors such as radar or wheel speed sensors, accelerometers, or gyros. Position sensors may comprise GPS receivers or transceivers, or WiFi-based position or mapping apps that are programmed to determine location based upon nearby WiFi hotspots, among others.

In an embodiment, examples of sensors 112 that may be used with tractors or other moving vehicles include engine speed sensors, fuel consumption sensors, area counters or distance counters that interact with GPS or radar signals, PTO (power take-off) speed sensors, tractor hydraulics sensors configured to detect hydraulics parameters such as pressure or flow, and/or and hydraulic pump speed, wheel speed sensors or wheel slippage sensors. In an embodiment, examples of controllers 114 that may be used with tractors include hydraulic directional controllers, pressure controllers, and/or flow controllers; hydraulic pump speed controllers; speed controllers or governors; hitch position controllers; or wheel position controllers provide automatic steering.

In an embodiment, examples of sensors 112 that may be used with seed planting equipment such as planters, drills, or air seeders include seed sensors, which may be optical, electromagnetic, or impact sensors; downforce sensors such as load pins, load cells, pressure sensors; soil property sensors such as reflectivity sensors, moisture sensors, electrical conductivity sensors, optical residue sensors, or temperature sensors; component operating criteria sensors such as planting depth sensors, downforce cylinder pressure sensors, seed disc speed sensors, seed drive motor encoders, seed conveyor system speed sensors, or vacuum level sensors; or pesticide application sensors such as optical or other electromagnetic sensors, or impact sensors. In an embodiment, examples of controllers 114 that may be used with such seed planting equipment include: toolbar fold controllers, such as controllers for valves associated with hydraulic cylinders; downforce controllers, such as controllers for valves associated with pneumatic cylinders, airbags, or hydraulic cylinders, and programmed for applying downforce to individual row units or an entire planter frame; planting depth controllers, such as linear actuators; metering controllers, such as electric seed meter drive motors, hydraulic seed meter drive motors, or swath control clutches; hybrid selection controllers, such as seed meter drive motors, or other actuators programmed for selectively allowing or preventing seed or an air-seed mixture from delivering seed to or from seed meters or central bulk hoppers; metering controllers, such as electric seed meter drive motors, or hydraulic seed meter drive motors; seed conveyor system controllers, such as controllers for a belt seed delivery conveyor motor; marker controllers, such as a controller for a pneumatic or hydraulic actuator; or pesticide application rate controllers, such as metering drive controllers, orifice size or position controllers.

In an embodiment, examples of sensors 112 that may be used with tillage equipment include position sensors for tools such as shanks or discs; tool position sensors for such tools that are configured to detect depth, gang angle, or lateral spacing; downforce sensors; or draft force sensors. In an embodiment, examples of controllers 114 that may be used with tillage equipment include downforce controllers or tool position controllers, such as controllers configured to control tool depth, gang angle, or lateral spacing.

In an embodiment, examples of sensors 112 that may be used in relation to apparatus for applying fertilizer, insecticide, fungicide and the like, such as on-planter starter fertilizer systems, subsoil fertilizer applicators, or fertilizer sprayers, include: fluid system criteria sensors, such as flow sensors or pressure sensors; sensors indicating which spray head valves or fluid line valves are open; sensors associated with tanks, such as fill level sensors; sectional or system-wide supply line sensors, or row-specific supply line sensors; or kinematic sensors such as accelerometers disposed on sprayer booms. In an embodiment, examples of controllers 114 that may be used with such apparatus include pump speed controllers; valve controllers that are programmed to control pressure, flow, direction, PWM and the like; or position actuators, such as for boom height, subsoiler depth, or boom position.

In an embodiment, examples of sensors 112 that may be used with harvesters include yield monitors, such as impact plate strain gauges or position sensors, capacitive flow sensors, load sensors, weight sensors, or torque sensors associated with elevators or augers, or optical or other electromagnetic grain height sensors; grain moisture sensors, such as capacitive sensors; grain loss sensors, including impact, optical, or capacitive sensors; header operating criteria sensors such as header height, header type, deck plate gap, feeder speed, and reel speed sensors; separator operating criteria sensors, such as concave clearance, rotor speed, shoe clearance, or chaffer clearance sensors; auger sensors for position, operation, or speed; or engine speed sensors. In an embodiment, examples of controllers 114 that may be used with harvesters include header operating criteria controllers for elements such as header height, header type, deck plate gap, feeder speed, or reel speed; separator operating criteria controllers for features such as concave clearance, rotor speed, shoe clearance, or chaffer clearance; or controllers for auger position, operation, or speed.

In an embodiment, examples of sensors 112 that may be used with grain carts include weight sensors, or sensors for auger position, operation, or speed. In an embodiment, examples of controllers 114 that may be used with grain carts include controllers for auger position, operation, or speed.

In an embodiment, examples of sensors 112 and controllers 114 may be installed in unmanned aerial vehicle (UAV) apparatus or "drones." Such sensors may include cameras with detectors effective for any range of the electromagnetic spectrum including visible light, infrared, ultraviolet, near-infrared (NIR), and the like; accelerometers; altimeters; temperature sensors; humidity sensors; pitot tube sensors or other airspeed or wind velocity sensors; battery life sensors; or radar emitters and reflected radar energy detection apparatus; other electromagnetic radiation emitters and reflected electromagnetic radiation detection apparatus. Such controllers may include guidance or motor control apparatus, control surface controllers, camera controllers, or controllers programmed to turn on, operate, obtain data from, manage and configure any of the foregoing sensors. Examples are disclosed in US Pat. App. No. 14/831,165 and the present disclosure assumes knowledge of that other patent disclosure.

In an embodiment, sensors 112 and controllers 114 may be affixed to soil sampling and measurement apparatus that is configured or programmed to sample soil and perform soil chemistry tests, soil moisture tests, and other tests pertaining to soil. For example, the apparatus disclosed in US Pat. No. 8,767,194 and US Pat. No. 8,712,148 may be used, and the present disclosure assumes knowledge of those patent disclosures.

In an embodiment, sensors 112 and controllers 114 may comprise weather devices for monitoring weather conditions of fields. For example, the apparatus disclosed in U.S. Provisional Application No. 62/154,207, filed on April 29, 2015, U.S. Provisional Application No. 62/175,160, filed on June 12, 2015, U.S. Provisional Application No. 62/198,060, filed on July 28, 2015, and U.S. Provisional Application No. 62/220,852, filed on September 18, 2015, may be used, and the present disclosure assumes knowledge of those patent disclosures.

### 2.4. PROCESS OVERVIEW-AGRONOMIC MODEL TRAINING

In an embodiment, the agricultural intelligence computer system 130 is programmed or configured to create an agronomic model. In this context, an agronomic model is a data structure in memory of the agricultural intelligence computer system 130 that comprises field data 106, such as identification data and harvest data for one or more fields. The agronomic model may also comprise calculated agronomic properties which describe either conditions which may affect the growth of one or more crops on a field, or properties of the one or more crops, or both. Additionally, an agronomic model may comprise recommendations based on agronomic factors such as crop recommendations, irrigation recommendations, planting recommendations, fertilizer recommendations, fungicide recommendations, pesticide recommendations, harvesting recommendations and other crop management recommendations. The agronomic factors may also be used to estimate one or more crop related results, such as agronomic yield. The agronomic yield of a crop is an estimate of quantity of the crop that is produced, or in some examples the revenue or profit obtained from the produced crop.

In an embodiment, the agricultural intelligence computer system 130 may use a preconfigured agronomic model to calculate agronomic properties related to currently received location and crop information for one or more fields. The preconfigured agronomic model is based upon previously processed field data, including but not limited to, identification data, harvest data, fertilizer data, and weather data. The preconfigured agronomic model may have been cross validated to ensure accuracy of the model. Cross validation may include comparison to ground truthing that compares predicted results with actual results on a field, such as a comparison of precipitation estimate with a rain gauge or sensor providing weather data at the same or nearby location or an estimate of nitrogen content with a soil sample measurement.

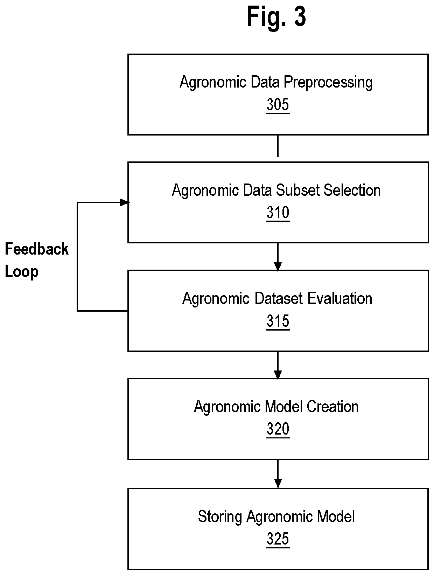

FIG. 3 illustrates a programmed process by which the agricultural intelligence computer system generates one or more preconfigured agronomic models using field data provided by one or more data sources. FIG. 3 may serve as an algorithm or instructions for programming the functional elements of the agricultural intelligence computer system 130 to perform the operations that are now described.

At block 305, the agricultural intelligence computer system 130 is configured or programmed to implement agronomic data preprocessing of field data received from one or more data sources. The field data received from one or more data sources may be preprocessed for the purpose of removing noise, distorting effects, and confounding factors within the agronomic data including measured outliers that could adversely affect received field data values. Embodiments of agronomic data preprocessing may include, but are not limited to, removing data values commonly associated with outlier data values, specific measured data points that are known to unnecessarily skew other data values, data smoothing, aggregation, or sampling techniques used to remove or reduce additive or multiplicative effects from noise, and other filtering or data derivation techniques used to provide clear distinctions between positive and negative data inputs.

At block 310, the agricultural intelligence computer system 130 is configured or programmed to perform data subset selection using the preprocessed field data in order to identify datasets useful for initial agronomic model generation. The agricultural intelligence computer system 130 may implement data subset selection techniques including, but not limited to, a genetic algorithm method, an all subset models method, a sequential search method, a stepwise regression method, a particle swarm optimization method, and an ant colony optimization method. For example, a genetic algorithm selection technique uses an adaptive heuristic search algorithm, based on evolutionary principles of natural selection and genetics, to determine and evaluate datasets within the preprocessed agronomic data.

At block 315, the agricultural intelligence computer system 130 is configured or programmed to implement field dataset evaluation. In an embodiment, a specific field dataset is evaluated by creating an agronomic model and using specific quality thresholds for the created agronomic model. Agronomic models may be compared and/or validated using one or more comparison techniques, such as, but not limited to, root mean square error with leave-one-out cross validation (RMSECV), mean absolute error, and mean percentage error. For example, RMSECV can cross validate agronomic models by comparing predicted agronomic property values created by the agronomic model against historical agronomic property values collected and analyzed. In an embodiment, the agronomic dataset evaluation logic is used as a feedback loop where agronomic datasets that do not meet configured quality thresholds are used during future data subset selection steps (block 310).

At block 320, the agricultural intelligence computer system 130 is configured or programmed to implement agronomic model creation based upon the cross validated agronomic datasets. In an embodiment, agronomic model creation may implement multivariate regression techniques to create preconfigured agronomic data models.

At block 325, the agricultural intelligence computer system 130 is configured or programmed to store the preconfigured agronomic data models for future field data evaluation.

## 2.5. IMPLEMENTATION EXAMPLE-HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

For example, FIG. 4 is a block diagram that illustrates a computer system 400 upon which an embodiment of the invention may be implemented. Computer system 400 includes a bus 402 or other communication mechanism for communicating information, and a hardware processor 404 coupled with bus 402 for processing information. Hardware processor 404 may be, for example, a general purpose microprocessor.

Computer system 400 also includes a main memory 406, such as a random access memory (RAM) or other dynamic storage device, coupled to bus 402 for storing information and instructions to be executed by processor 404. Main memory 406 also may be used for storing temporary variables or other intermediate information during execution of instructions to be executed by processor 404. Such instructions, when stored in nontransitory storage media accessible to processor 404, render computer system 400 into a special-purpose machine that is customized to perform the operations specified in the instructions.

Computer system 400 further includes a read only memory (ROM) 408 or other static storage device coupled to bus 402 for storing static information and instructions for processor 404. A storage device 410, such as a magnetic disk, optical disk, or solid-state drive is provided and coupled to bus 402 for storing information and instructions.

Computer system 400 may be coupled via bus 402 to a display 412, such as a cathode ray tube (CRT), for displaying information to a computer user. An input device 414, including alphanumeric and other keys, is coupled to bus 402 for communicating information and command selections to processor 404. Another type of user input device is cursor control 416, such as a mouse, a trackball, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane.

Computer system 400 may implement the techniques described herein using customized hard-wired logic, one or more ASICs or FPGAs, firmware and/or program logic which in combination with the computer system causes or programs computer system 400 to be a special-purpose machine. According to one embodiment, the techniques herein are performed by computer system 400 in response to processor 404 executing one or more sequences of one or more instructions contained in main memory 406. Such instructions may be read into main memory 406 from another storage medium, such as storage device 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 410. Volatile media includes dynamic memory, such as main memory 406. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 402. Transmission media can also take the form of acoustic or light waves, such as those generated during radio-wave and infrared data communications.

Various forms of media may be involved in carrying one or more sequences of one or more instructions to processor 404 for execution. For example, the instructions may initially be carried on a magnetic disk or solid-state drive of a remote computer. The remote computer can load the instructions into its dynamic memory and send the instructions over a telephone line using a modem. A modem local to computer system 400 can receive the data on the telephone line and use an infra-red transmitter to convert the data to an infra-red signal. An infra-red detector can receive the data carried in the infrared signal and appropriate circuitry can place the data on bus 402. Bus 402 carries the data to main memory 406, from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling to a network link 420 that is connected to a local network 422. For example, communication interface 418 may be an integrated services digital network (ISDN) card, cable modem, satellite modem, or a modem to provide a data communication connection to a corresponding type of telephone line. As another example, communication interface 418 may be a local area network (LAN) card to provide a data communication connection to a compatible LAN. Wireless links may also be implemented. In any such implementation, communication interface 418 sends and receives electrical, electromagnetic or optical signals that carry digital data streams representing various types of information.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication network now commonly referred to as the "Internet" 428. Local network 422 and Internet 428 both use electrical, electromagnetic or optical signals that carry digital data streams. The signals through the various networks and the signals on network link 420 and through communication interface 418, which carry the digital data to and from computer system 400, are example forms of transmission media.

Computer system 400 can send messages and receive data, including program code, through the network(s), network link 420 and communication interface 418. In the Internet example, a server 430 might transmit a requested code for an application program through Internet 428, ISP 426, local network 422 and communication interface 418.

The received code may be executed by processor 404 as it is received, and/or stored in storage device 410, or other non-volatile storage for later execution.

3. GENERATING YIELD MAPS

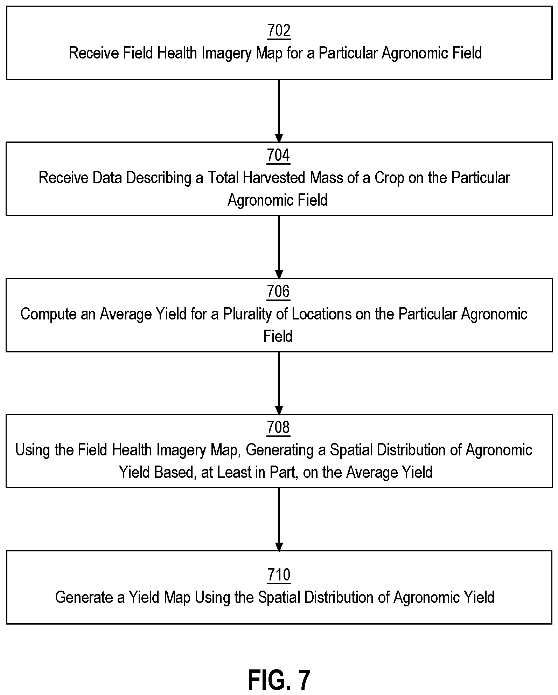

FIG. 7 depicts a method of generating yield maps using imagery-based maps.

At step 702, the agricultural intelligence computer system receives field health imagery maps for a particular agronomic field. A field health imagery map, as used herein, refers to a spatial map of field health values derived from imagery of an agronomic field. Images of the agronomic field may comprise captured images using one or more spectral bands of an agronomic field using one or more of a satellite, aerial drone, manned aircraft, or other image capture devices.

Examples of field health imagery maps include the normalized difference vegetative index (NDVI) and the transformed soil adjusted vegetation index (TSAVI). The agricultural intelligence computer system may receive vegetative indices from an external computing device. Additionally or alternatively, the agricultural intelligence computer system may generate field health imagery maps. The agricultural intelligence computer system may generate the field health imagery maps directly from images of the agronomic field, from one or more vegetative indices received over a network, and/or a combination of the two. For example, the agricultural intelligence computer system may augment an NDVI map using reflectance data in a particular frequency band.

In an embodiment, the agricultural intelligence computer system selects from a plurality of field health imagery maps. For example, the agricultural intelligence computer system may receive field health imagery maps periodically during a growing season for a particular agronomic field. As another example, the agricultural intelligence computer system may receive multiple field health imagery maps from different sources for a particular period of time. The agricultural intelligence computer system may select an image based on one or more factors, such as a most recent image, an image with a highest average field health value, and/or an image with a highest resolution. Additionally or alternatively, the agricultural intelligence computer system may cause display of a plurality of field health imagery maps on a field manager computing device and receive input from the field manager computing device selecting a particular field health imagery map.

In an embodiment, the agricultural intelligence computer system uses a combination of factors to select a field health imagery map, such as a number of days from planting, a number of accumulated growing degree days from planting, soil properties, and/or average field health imagery values. As an example, the agricultural intelligence computer system may select field health imagery maps based on a combination of the number of days from planting and the field-level average value of the field health imagery map. For instance, the agricultural intelligence computer system may be configured to compute a relevance value as a sum of an optimal date value and an optimal field health imagery average value. The optimal date value may be a value which decreases as the distance between the date of the field health imagery map and a selected optimal number of days from planting increases. In an embodiment, the optimal field health imagery average value is the maximum field health imagery average value across all of the field health imagery maps.

In an embodiment, the agricultural intelligence computer system combines a plurality of field health imagery maps to generate a composite field health imagery map. For example, the agricultural intelligence computer system may match locations in a plurality of maps such that a pixel on a first map corresponds to the same physical location on an agronomic field as a corresponding pixel on a second map. The agricultural intelligence computer system may generate an aggregated pixel value as an average of the pixel on the first map and the corresponding pixel on the second map. Other methods of aggregating maps may include using weighted averages to give deference to particular maps or to use post processing smoothing techniques to reduce variation between pixels.

At step 704, the agricultural intelligence computer system receives data describing a total harvested mass of a crop on the particular agronomic field. For example, the agricultural intelligence computer system may cause display of a graphical user interface on a field manager computing device with options for inputting a total mass and/or weight of a harvested crop from the particular agronomic field. Additionally or alternatively, one or more agricultural implements, such as a combine harvester, may include sensors that measure a total harvested mass or weight of a harvested crop. The one or more agricultural implements may send data directly to the agricultural intelligence computer system identifying the mass and/or weight of the harvested crop.

At step 706, the agricultural intelligence computer system computes an average yield for a plurality of locations on the particular agronomic field. The computation of the average yield may be dependent on the field health imagery maps. For example, if the field health imagery map being used has a resolution that breaks up the agronomic field into twenty locations of equal size, the agricultural intelligence computer system may compute the average yield as the total yield divided by the number of locations on the field, i.e. the twenty locations. Additionally or alternatively, the average yield may be computed as the total yield divided by the total area of the agronomic yield which produced the total yield. When a yield is computed for a particular pixel, the agricultural intelligence computer system may multiply the average yield computed as a function of area by a physical size of the location corresponding to a pixel.

As a practical example, a total yield for a 500-acre agronomic field may be measured as 50,000 bushels of a crop. The average yield for the agronomic field may be computed as 50,000/500 or 100 bushels/acre. When computing an average yield for a pixel, the average yield for the agronomic field would be multiplied by the size of the location to which a pixel corresponds. Alternatively, if each pixel of a field health imagery map corresponds to a location that is 0.002 acres, the field health imagery map may comprise 250,000 pixels for the agronomic field. Thus, the average yield by pixel would be 50,000/250,000 or 0.2 bushels/pixel.

At step 708, the agricultural intelligence computer system uses the field imagery map to generate a spatial distribution of agronomic yield based, at least in part, on the average yield. For example, the agricultural intelligence computer system may compute an agronomic yield for each location on the agronomic field according to the following equation:

$$y = \frac{Yx}{\bar{x}}$$

wherein Y is the average yield, x is the field health imagery value at the location, and $\bar{x}$ is the average field health imagery value across the field health imagery map. For instance, x may be a vegetative index value such as NDVI or TSAVI and $\bar{x}$ may be the average of the vegetative index values.

In an embodiment, the agricultural intelligence computer system uses a polynomial function to generate the spatial distribution of agronomic yield. For example, the agricultural intelligence computer system may compute an agronomic yield for each location on the agronomic field according to the following equation:

$$y = \sum_{k=1}^{n_\phi} \beta_k(d)\phi_k(x(d))$$

where $n_\phi$ is a number of basis functions, $\beta_k(d)$ is a parameter that varies with the date of the field health imagery map $x(d)$. The basis functions $\phi_k$ may be orthogonal functions over the possible values of $x$. The agricultural intelligence computer system may use historical training data of observed imagery at various dates with corresponding yield maps to derive a mapping from the date $d$ to the parameter vector $\beta(d)$. The agricultural intelligence computer system may additionally use the historical error to derive a mapping from the date $d$ to an error $\sigma(d)$.

In an embodiment, the agricultural intelligence computer system uses a hard constraint to limit the polynomial equation described above. For example, the agricultural intelligence computer system may scale the yield at each location so that the average yield equals the observed yield using the following equation:

$$y^* = \frac{Yy}{\bar{y}}$$

where $y^*$ is the scaled yield value and $\bar{y}$ is the average of the computed yields using the polynomial equation above.

In an embodiment, the agricultural intelligence computer system adjusts the mapping based on estimates of the yield at specific locations on the agronomic field. For example, the agricultural intelligence computer system may receive data from a field manager computing device identifying an observed yield value at one or more particular locations on the agronomic field. The agricultural intelligence computer system may shift and/or scale the yield map such that yield values corresponding to the one or more particular locations are closer to the observed yield values. The degree to which the yield map is shifted may depend on an estimated accuracy of the observed yield values and/or the accuracy of the generated yield map given by $\sigma(d)$.

In an embodiment, the agricultural intelligence computer system uses a deep learning network model to generate the agronomic yield map from the field health imagery maps. For example, the agricultural intelligence computer system may receive historical training data for an agronomic field comprising prior field health imagery maps and prior yield maps. The prior health image maps may include a one or more maps for each of a plurality of image bands, each of a plurality of times within a year with corresponding data identifying the relative date of the yield map, or a combination of the two. The agricultural intelligence computer system may train a sequential deep learning network model using the field health imagery maps, data identifying an image band of the field health imagery maps, and/or data identifying a relative date of the field health imagery maps as inputs with the agronomic yield maps as the outputs. The sequential deep learning network model may be used to generate agronomic yield maps from field health imagery maps and/or adjust agronomic yield maps computed using the methods described herein.

At step 710, the agricultural intelligence computer system generates a yield map using the spatial distribution of agronomic yield. For example, the agricultural intelligence computer system may generate a pixel map where the location of a pixel corresponds to a physical location on an agronomic field and the value of the pixel corresponds to an agronomic yield for the physical location on the agronomic field. Thus, two neighboring pixels in the yield map would correspond to two neighboring physical locations on the agronomic field. The yield map may be stored as a series of locational values. For example, the agricultural intelligence computer system may store the yield map as a matrix of pixel values, each pixel value corresponding to a yield value and the location of the pixel value in the matrix corresponding to the physical location on the agronomic field of the yield value.

### 3.1 YIELD MAP UNIFORMITY

In an embodiment, the agricultural intelligence computer system uses the methods described herein to generate a yield map that imputes uniform treatment of crops across an area where uniform treatment was not received. For instance, some applicable uses of a yield map may require a uniform yield map for a particular agronomic field. When different locations on an agronomic field receive different treatment, such as different hybrids planted or different amounts of nutrient added to the field, variability in the yield across the different locations may be a product of different treatments more so than a product of variations in the actual field.

In order to account for variability due to different treatments, the agricultural intelligence computer system may impute yield values to one or more locations based on the yield values for a base set of locations. For example, the agricultural intelligence computer system may select one set of locations which received uniform treatment. The set of locations may comprise a set selected by a field manager computing device, a set comprising a largest number of locations, and/or a set comprising a largest total area. The agricultural intelligence computer system may generate a yield map comprising the set of locations as described above.

For locations on the agricultural field which received different treatments, the agricultural intelligence computer system may separate the locations into sets of uniform treatment. Thus, if the agronomic field comprises three different types of treatments, one set of locations which received the first type of treatment would be treated as the base set. The remaining locations would be split into two sets of locations such that each set comprises only locations which received a uniform treatment.

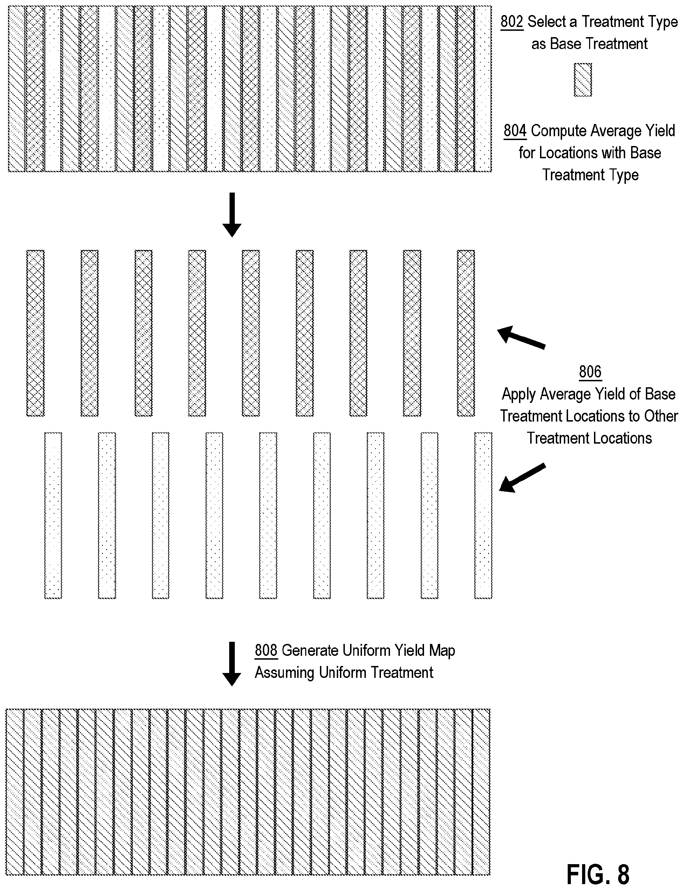

FIG. 8 depicts an example of generating a uniform yield map where multiple parts of the field received different treatments. In FIG. 8, an agronomic field includes a plurality of strips each of which received one of three different treatment types. At step 802, a base treatment type is selected. The base treatment type may be selected through input on a field manager computing device and/or based on one or more of a total size of all locations with the treatment type, an average yield of all locations with the treatment type, and/or a type of treatment. For example, the agricultural intelligence computer system may select the base treatment type as the treatment type which received the highest average agronomic yield.

At step 804, the average yield for locations with the base treatment type is computed. For example, the agricultural intelligence computer system may receive a plurality of total yield values, each of which applying to all locations which received the same treatment. Thus, if the three treatment types include strips which received no fertilizer, strips which received moderate amounts of fertilizer, and strips which received a large amount of fertilizer, a first agronomic yield value may comprise a total yield for all locations which received no fertilizer.

At step 806, the average yield of base treatment locations is applied to the other treatment locations. For example, instead of computing the yield for a location based on the pixel value for the location and the overall average yield, the server computer computes the hypothetical yield for the location based on the pixel value and the average yield for the locations which received the base value. Thus, the spatial variation in the locations that did not receive the base treatment is preserved while the average agronomic field for the base treatment locations is utilized to generate hypothetical yield values if the base treatment was performed.

At step 808 the agricultural intelligence computer system generates a uniform yield map assuming uniform treatment across the field of the base treatment. For example, the agricultural intelligence computer system may generate a spatial map of the agronomic field which combines the estimated yield for the base treatment locations with estimated yields of the other locations which are computed based on the average yield for the base locations. Thus, in FIG. 8 the average yield of the base location is distributed across all locations which received the second treatment type based on the pixel variability of all locations which received the second treatment type. The average yield of the base location is also distributed across all locations which received the third treatment type based on the pixel variability of all locations which received the third treatment type. The locations are then combined into a singular spatial distribution of agronomic yield for all locations.

3.2 EXAMPLE GRAPHICAL USER INTERFACE IMPLEMENTATION

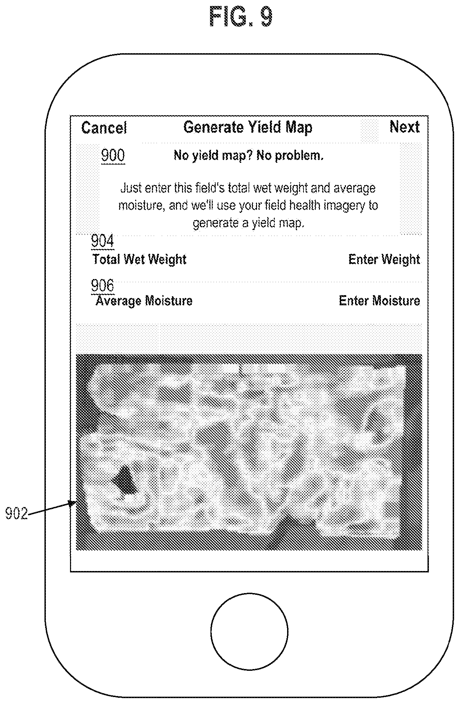

FIG. 9 depicts an example graphical user interface for generating yield maps using imagery-based maps. Interface 900 includes field health imagery map 902, total wet weight option 904, and average moisture 906. A field manager computing device may display the interface 900 in response to receiving a request to generate an agronomic yield map for a particular field.

In an embodiment, the interface 900 comprises options for selecting one or more field health imagery maps. For example, in response to receiving a selection of the field health imagery map 902, the interface 900 may display a plurality of field health imagery maps corresponding to the agronomic field. The interface may include options for selecting one or more of the displayed field health imagery maps for use in generating the agronomic yield map. If multiple maps are selected, the agricultural intelligence computer system may combine the maps using the methods described herein.

Total wet weight option 904 and average moisture option 906 comprise selectable options for inputting a total weight of the crop and an average moisture of the field. In the embodiment of FIG. 9, the total wet weight and average moisture are manually entered into the interface using the total wet weight option 904 and average moisture option 906. In some embodiments, the total wet weight and/or average moisture may be automatically entered into the interface based on measurements from one or more agricultural implements. The average moisture value entered into average moisture option 906 may be used to compute the dry yield for a location after the wet weight for the location has been computed.

In an embodiment, the interface 900 includes options for selecting different management zones. For example, the agricultural intelligence computer system may store data indicating different management zones of a field which received different treatments. The interface 900 may include options for identifying the total wet weight and/or average moisture for each management zone, thereby allowing the agricultural intelligence computer system to generate agronomic yield maps which assume uniform treatment of different treatment types.

In an embodiment, the interface 900 includes options for selecting a management zone to act as a base treatment zone. For example, a drop-down menu may be populated with a list of management zones on the field. The interface 900 may receive input selecting a management zone from the field for use as a base treatment zone. The interface 900 may additionally display an option for identifying a total weight for the selected management zone. For example, in response to receiving a selection of management zone A, the field manager computing device may display an option for inputting the total weight for the crop from the selected management zone.

Additionally or alternatively, the total weight for the management zone may be received from an apparatus on the field and/or one or more external computing devices. For example, the agricultural intelligence computer system may store data identifying a total yield for each management zone. In response to a selection of a management zone, the agricultural intelligence computer system may identify the total weight for the selected management zone and use the identified total weight to generate the yield maps using the methods described herein.

3.3 YIELD MAP USAGE

In an embodiment, the agricultural intelligence computer system generates a yield map for display on a field manager computing device. For example, the agricultural intelligence computer system may display a map which identifies, for each location on the agronomic field, a total yield for the location. For a color-coded map, such as one where each pixel value correlates to an agronomic yield value, the displayed map may include data identifying a mapping between pixel color and agronomic yield.

In an embodiment, the agricultural intelligence computer system generates an interactive yield map for display on a field manager computing device. The display of the interactive yield map on the field manager computing device may be configured to receive input selecting an area of the field. In response to the selection, the agricultural intelligence computer system may display the agronomic yield for the location corresponding to the selected area of the field on the interactive yield map.

In an embodiment, the generated yield map is used as input to one or more digital models of crop growth and/or crop yield. For example, a digital model of crop growth may use yield maps as inputs to model crop growth for future years on the agronomic field. In situations where a measured agronomic yield map is unavailable, is unavailable at a high resolution, or is unavailable uniformly due to separate treatments being applied to separate areas of a field, the agricultural intelligence computer system may use the field health imagery map in conjunction with a total yield value to generate agronomic yield maps for use as inputs into the digital models.

The agronomic yield maps may additionally be used to generate planting prescriptions for a future year. For example, many modeling techniques for generating prescription maps use inputs of agronomic yield maps. Often, variability in the prescription map is only available at the resolution of the yield map. Thus, the techniques described herein may be used to generate a yield map with a high resolution, thereby allowing for the generation of prescription maps with variability at a high resolution.

4. BENEFITS OF CERTAIN EMBODIMENTS

The techniques and methods described herein allow a computing system to generate a yield map where yield values for individual locations are unavailable. The techniques described herein may increase efficiency in computing agronomic yield for different fields as the techniques can be applied to any field or crop regardless of a source of imaging, such as drone, satellite, fixed wing crafts, or ground based sensors. Thus, the computing system is improved by being configured to apply a uniform method to any field without storing variations of the computation based on field, crop, or source of imaging.

The techniques and methods described herein allow the computing system to generate uniform yield maps which can serve multiple purposes. For instance, the uniform yield maps may be used as inputs into a model to build a prescription for an agronomic implement to perform on a field whereas a non-uniform yield map may not be usable for generating said prescriptions. Additionally, the techniques and methods described herein allow a computing system to generate a yield map at higher resolutions than the available yield data, thus allowing for the display of higher resolution yield maps or the generation of high resolution prescriptions.

5. EXTENSIONS AND ALTERNATIVES

In the foregoing specification, embodiments have been described with reference to numerous specific details that may vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction.

**Claims**

**1.** A computer implemented method comprising:

receiving, at an agricultural computer system, one or more field health imagery maps for a particular agronomic field, the one or more field health imagery maps, comprising spatial maps of vegetative index values for the agronomic field indicative of a crop and derived from imagery of the agronomic field;

receiving, at the agricultural computer system, data describing a total harvested mass of the crop on the particular agronomic field;

breaking up the field in a number of locations computing an average yield per location for the particular agronomic field basedon a division of the total harvested mass of the crop by the number of locations;

generating a spatial distribution of agronomic yield based, at least in part, on the average yield per location and the one or more field health imagery maps indicative of the vegetative index values per location, wherein the agronomic yield per location is computed according to the equation:

$$y = \frac{Y.x}{\bar{x}}$$

wherein Y is the average yield, x is the vegetative index value at the location, and $\bar{x}$ is the average of the vegetative index values across the field health imagery map;

generating a yield map using the spatial distribution of agronomic yield and

causing display of the yield map on a field manager computing device;

using the yield map as an input into a digital model of crop growth or a digital model of agronomic yield; or

using the yield map as an input into a digital model for generating a planting prescription for a future year.

2. The method of claim 1, wherein generating the yield map comprises:

selecting a base treatment type;

identifying a plurality of the locations as base locations on the agronomic field which received the base treatment type;

receiving base yield data comprising agronomic yield values at each of the base locations;

using the base yield data, computing an average yield for the base locations;

using the spatial distribution of agronomic yield and the average yield for the plurality of base locations, computing base yield values for a plurality of locations, which are non-base locations on the agronomic field, and which received a second treatment type that is different than the base treatment type; and

generating the yield map comprising the agronomic yield values at the base locations and the base yield values at the non-base locations.

3. The method of claim 2, further comprising:

causing display, through a graphical user interface executing on the client computing device, a plurality of field health imagery maps and options for selecting the one or more of the plurality of field health imagery maps;

receiving input selecting the one or more field health imagery maps and, in response, using the one or more field health imagery maps when computing the spatial distribution of agronomic yield;

causing displaying, through the graphical user interface executing on the client computing device, a plurality of management zones on the one or more field health imagery maps;

receiving input selecting a particular management zone of the plurality of management zones and, in response, selecting a treatment type of the particular management zone as the base treatment type.

4. The method of claim 1, further comprising:

receiving data describing an observed yield values at one or more particular locations on the agronomic field;

adjusting values in the yield map such that values corresponding to the one or more particular locations are closer to the observed yield values.

5. The method of claim 1, wherein the one or more field health imagery maps comprise a plurality of field health imagery maps, the method further comprising combining the plurality of field health imagery maps into a composite field health imagery map and generating the spatial distribution of agronomic yield using the composite field health imagery map.

6. An agricultural computer system comprising:

one or more processors;

a memory storing instructions which, when executed by the one or more processors, causes performance of:

receiving one or more field health imagery maps for a particular agronomic field, the one or more field health imagery maps, comprising spatial maps of vegetative index values for the agronomic field indicative of a crop and derived from imagery of the agronomic field;

receiving data describing a total harvested mass of the crop on the particular agronomic field;

breaking up the field in a number of locationscomputing an average yield per location for the particular agronomic field based, on a division of the total harvested mass of the crop by the number of locations;

generating a spatial distribution of agronomic yield based, at least in part, on the average yield per location and the one or more field health imagery maps indicative of the vegetative index values per location, wherein the agronomic yield per location is computed according to the equation:

$$y = \frac{Y.x}{\bar{x}}$$

wherein Y is the average yield, x is the vegetative index value at the location, and $\bar{x}$ is the average of the vegetative index values across the field health imagery map;

generating a yield map using the spatial distribution of agronomic yield and causing display of the yield map on a field manager computing device;

using the yield map as an input into a digital model of crop growth or a digital model of agronomic yield;

using the yield map as an input into a digital model for generating a planting prescription for a future year.

7. The system of claim 6, wherein generating the yield map comprises:

selecting a base treatment type;

identifying a plurality of the locations as base locations on the agronomic field which received the base treatment type;

receiving base yield data comprising agronomic yield values at each of the base locations;

using the base yield data, computing an average yield for the plurality of base locations;

using the spatial distribution of agronomic yield and the average yield for the base locations, computing base yield values for a plurality of the locations, which are non-base locations on the agronomic field, and which received a second treatment type that is different than the base treatment type;

generating the yield map comprising the agronomic yield values at the base locations and the base yield values at the non-base locations.

8. The system of claim 7, wherein the instructions, when executed by the one or more processors, further cause performance of:

causing display, through a graphical user interface executing on the client computing device, a plurality of field health imagery maps and options for selecting the one or more of the plurality of field health imagery maps;

receiving input selecting the one or more field health imagery maps and, in response, using the one or more field health imagery maps when computing the spatial distribution of agronomic yield;

causing display, through the graphical user interface executing on the client computing device, a plurality of management zones on the one or more field health imagery maps;

receiving input selecting a particular management zone of the plurality of management zones and, in response, selecting a treatment type of the particular management zone as the base treatment type.

9. The system of claim 8, wherein the instructions, when executed by the one or more processors, further cause performance of:

receiving data describing an observed yield values at one or more particular locations on the agronomic field;

adjusting values in the yield map such that values corresponding to the one or more particular locations are closer to the observed yield values.

10. The system of claim 9, wherein the instructions, when executed by the one or more processors, further cause performance of:

training a deep learning network model using past field health imagery maps, data identifying an image band of the past field health imagery maps, and data identifying relative dates of the past field health imagery maps as inputs and agronomic yield maps as outputs;

wherein generating the spatial distribution of agronomic yield comprises computing an output agronomic yield map from the deep learning network model using the one or more field health imagery maps, an image band of the one or more field health imagery maps, and a relative date of the one or more field health imagery maps as inputs.

11. The system of claim 10, wherein the one or more field health imagery maps comprise a plurality of field health imagery maps, wherein the instructions, when executed by the one or more processors, further cause performance of comprising combining the plurality of field health imagery maps into a composite field health imagery map and generating the spatial distribution of agronomic yield using the composite field health imagery map.

## Patentansprüche

1. Verfahren, das durch einen Computer ausgeführt wird, das die folgenden Schritte umfasst:

Erhalten einer oder mehrerer Feldgesundheitsbildkarten für ein bestimmtes landwirtschaftliches Feld bei einem landwirtschaftlichen Computersystem, wobei die eine oder die mehreren Feldgesundheitsbildkarten räumliche Karten von vegetativen Indexwerten für das landwirtschaftliche Feld umfassen, die eine Ernte anzeigen und aus Bildern des landwirtschaftlichen Felds abgeleitet werden;
Erhalten von Daten, die eine geerntete Gesamtmasse der Ernte auf dem bestimmten landwirtschaftlichen Feld beschreiben, bei dem landwirtschaftlichen Computersystem;
Teilen des Felds in eine Anzahl von Positionen;
Berechnen eines mittleren Ertrags pro Position für das bestimmte landwirtschaftliche Feld auf der Basis einer Division der geernteten Gesamtmasse der Ernte durch die Anzahl an Positionen;
Erzeugen einer räumlichen Verteilung eines landwirtschaftlichen Ertrags wenigstens teilweise auf der Basis des mittleren Ertrags pro Position und der einen oder der mehreren Feldgesundheitsbildkarten, die die vegetativen Indexwerte pro Position anzeigen, wobei der landwirtschaftliche Ertrag pro Position entsprechend der folgenden Gleichung berechnet wird:

$$y = \frac{Y \cdot x}{\bar{x}} \ ,$$

wobei Y der mittlere Ertrag ist, x der vegetative Indexwert bei der Position ist und $\bar{x}$ der Mittelwert der vegetativen Indexwerte über die Feldgesundheitsbildkarte ist;
Erzeugen einer Ertragskarte unter Verwendung der räumlichen Verteilung des landwirtschaftlichen Ertrags, und
Veranlassen der Anzeige der Ertragskarte auf einer Feldverwalter-Computervorrichtung;
Verwenden der Ertragskarte als eine Eingabe in ein digitales Modell eines Erntewachstums oder in ein digitales Modell eines landwirtschaftlichen Ertrags; oder
Verwenden der Ertragskarte als eine Eingabe in ein digitales Modell zum Erzeugen einer Pflanzverordnung für ein zukünftiges Jahr.

2. Verfahren nach Anspruch 1, wobei das Erzeugen der Ertragskarte die folgenden Schritte umfasst:

Auswählen einer Basisbehandlungsart;
Identifizieren mehrerer der Positionen als Basispositionen auf dem landwirtschaftlichen Feld, die die Basisbehandlungsart erhalten haben;
Erhalten von Basisertragsdaten, die landwirtschaftliche Ertragswerte an jeder der Basispositionen umfassen;
Berechnen eines mittleren Ertrags für die Basispositionen unter Verwendung der Basisertragsdaten;
Berechnen von Basisertragswerten für mehrere Positionen, die keine Basispositionen auf dem landwirtschaftlichen Feld sind, und die eine zweite Behandlungsart erhalten haben, die sich von der Basisbehandlungsart unterscheidet, unter Verwendung der räumlichen Verteilung des landwirtschaftlichen Ertrags und des mittleren Ertrags für die mehreren Basispositionen; und
Erzeugen der Ertragskarte, die die landwirtschaftlichen Ertragswerte bei den Basispositionen und die Basisertragswerte bei den Nichtbasispositionen umfasst.

3. Verfahren nach Anspruch 2, das ferner die folgenden Schritte umfasst:

Veranlassen, dass mehrere Feldgesundheitsbildkarten und Optionen zum Auswählen der einen oder der mehreren der mehreren Feldgesundheitsbildkarten durch eine grafische Benutzerschnittstelle angezeigt werden, die auf der Client-Computervorrichtung ausgeführt wird;
Erhalten der Eingabe, die die eine oder mehrere Feldgesundheitsbildkarten auswählt, und, in Reaktion darauf, Verwenden der einen oder der mehreren Feldgesundheitsbildkarten, wenn die räumliche Verteilung des landwirtschaftlichen Ertrags berechnet wird;
Veranlassen, dass mehrere Verwaltungszonen auf der einen oder den mehreren Feldgesundheitsbildkarten durch die grafische Benutzerschnittstelle angezeigt werden, die auf der Client-Computervorrichtung ausgeführt wird;
Erhalten eine Eingabe, die eine bestimmte Verwaltungszone aus den mehreren Verwaltungszonen auswählt, und, in Reaktion darauf, Auswählen einer Behandlungsart der bestimmten Verwaltungszone als die Basisbehandlungsart.

4. Verfahren nach Anspruch 1, das ferner die folgenden Schritte umfasst:

Erhalten von Daten, die beobachtete Ertragswerte bei einer oder mehreren bestimmten Positionen auf dem landwirtschaftlichen Feld beschreiben;

Anpassen von Werten in der Ertragskarte, so dass Werte, die der einen oder den mehreren bestimmten Positionen entsprechen, näher bei den beobachteten Ertragswerten liegen.

5. Verfahren nach Anspruch 1, wobei die eine oder die mehreren Feldgesundheitsbildkarten mehrere Feldgesundheitsbildkarten umfassen, wobei das Verfahren ferner das Kombinieren der mehreren Feldgesundheitsbildkarten in eine zusammengesetzte Feldgesundheitsbildkarte und das Erzeugen der räumlichen Verteilung eines landwirtschaftlichen Ertrags unter Verwendung der zusammengesetzten Feldgesundheitsbildkarte umfasst.

6. Landwirtschaftliches Computersystem, das Folgendes umfasst:

einen oder mehrere Prozessoren;
einen Speicher, der Anweisungen speichert, die dann, wenn sie durch den einen oder die mehreren Prozessoren ausgeführt werden, die Ausführung der folgenden Schritte veranlassen:

Erhalten einer oder mehrerer Feldgesundheitsbildkarten für ein bestimmtes landwirtschaftliches Feld, wobei die eine oder die mehreren Feldgesundheitsbildkarten räumliche Karten von vegetativen Indexwerten für das landwirtschaftliche Feld umfassen, die eine Ernte anzeigen und aus Bildern des landwirtschaftlichen Felds abgeleitet werden;
Erhalten von Daten, die eine geerntete Gesamtmasse der Ernte auf dem bestimmten landwirtschaftlichen Feld beschreiben;
Teilen des Felds in eine Anzahl von Positionen und Berechnen eines mittleren Ertrags pro Position für das bestimmte landwirtschaftliche Feld auf der Basis einer Division der geernteten Gesamtmasse der Ernte durch die Anzahl an Positionen;
Erzeugen einer räumlichen Verteilung eines landwirtschaftlichen Ertrags wenigstens teilweise auf der Basis des mittleren Ertrags pro Position und der einen oder der mehreren Feldgesundheitsbildkarten, die die vegetativen Indexwerte pro Position anzeigen, wobei der landwirtschaftliche Ertrag pro Position entsprechend der folgenden Gleichung berechnet wird:

$$y = \frac{Y \cdot x}{\bar{x}} \, ,$$

wobei Y der mittlere Ertrag ist, x der vegetative Indexwert bei der Position ist, und $\bar{x}$ der Mittelwert der vegetativen Indexwerte über die Feldgesundheitsbildkarte ist;
Erzeugen einer Ertragskarte unter Verwendung der räumlichen Verteilung des landwirtschaftlichen Ertrags und Veranlassen der Anzeige der Ertragskarte auf einer Feldverwalter-Computervorrichtung;
Verwenden der Ertragskarte als eine Eingabe in ein digitales Modell eines Erntewachstums oder in ein digitales Modell eines landwirtschaftlichen Ertrags;
Verwenden der Ertragskarte als eine Eingabe in ein digitales Modell zum Erzeugen einer Pflanzverordnung für ein zukünftiges Jahr.

7. System nach Anspruch 6, wobei das Erzeugen der Ertragskarte die folgenden Schritte umfasst:

Auswählen einer Basisbehandlungsart;
Identifizieren mehrerer der Positionen als Basispositionen auf dem landwirtschaftlichen Feld, die die Basisbehandlungsart erhalten haben;
Erhalten von Basisertragsdaten, die landwirtschaftliche Ertragswerte an jeder der Basispositionen umfassen;
Berechnen eines mittleren Ertrags für die mehreren Basispositionen unter Verwendung der Basisertragsdaten;
Berechnen von Basisertragswerten für mehrere Positionen, die keine Basispositionen auf dem landwirtschaftlichen Feld sind, und die eine zweite Behandlungsart erhalten haben, die sich von der Basisbehandlungsart unterscheidet, unter Verwendung der räumlichen Verteilung des landwirtschaftlichen Ertrags und des mittleren Ertrags für die Basispositionen; und
Erzeugen der Ertragskarte, die die landwirtschaftlichen Ertragswerte bei den Basispositionen und die Basisertragswerte bei den Nichtbasispositionen umfasst.

8. System nach Anspruch 7, wobei die Anweisungen dann, wenn sie durch den einen oder die mehreren Prozessoren ausgeführt werden, ferner die Ausführung der folgenden Schritte veranlassen:

Veranlassen, dass mehrere Feldgesundheitsbildkarten und Optionen zum Auswählen der einen oder der mehreren der mehreren Feldgesundheitsbildkarten durch eine grafische Benutzerschnittstelle angezeigt werden, die auf der Client-Computervorrichtung ausgeführt wird; Erhalten der Eingabe, die die eine oder mehrere Feldgesundheitsbildkarten auswählt, und, in Reaktion darauf, Verwenden der einen oder der mehreren Feldgesundheitsbildkarten, wenn die räumliche Verteilung des landwirtschaftlichen Ertrags berechnet wird; Veranlassen, dass mehrere Verwaltungszonen auf der einen oder den mehreren Feldgesundheitsbildkarten durch die grafische Benutzerschnittstelle angezeigt werden, die auf der Client-Computervorrichtung ausgeführt wird; Erhalten einer Eingabe, die eine bestimmte Verwaltungszone aus den mehreren Verwaltungszonen auswählt, und, in Reaktion darauf, Auswählen einer Behandlungsart der bestimmten Verwaltungszone als die Basisbehandlungsart.

9. System nach Anspruch 8, wobei die Anweisungen dann, wenn sie durch den einen oder die mehreren Prozessoren ausgeführt werden, ferner die Ausführung der folgenden Schritte veranlassen:

Erhalten von Daten, die beobachtete Ertragswerte bei der einen oder den mehreren bestimmten Positionen auf dem landwirtschaftlichen Feld beschreiben; Anpassen von Werten in der Ertragskarte, so dass Werte, die der einen oder den mehreren bestimmten Positionen entsprechen, näher bei den beobachteten Ertragswerten liegen.

10. System nach Anspruch 9, wobei die Anweisungen dann, wenn sie durch den einen oder die mehreren Prozessoren ausgeführt werden, ferner die Ausführung der folgenden Schritte veranlassen:

Trainieren eines Deep-Learning-Netzwerkmodells unter Verwendung früherer Feldgesundheitsbildkarten, Daten, die eine Bildserie der früheren Feldgesundheitsbildkarten identifizieren, und Daten, die Relativdaten der früheren Feldgesundheitsbildkarten identifizieren, als Eingabe, und landwirtschaftlicher Ertragskarten als Ausgabe; wobei das Erzeugen der räumlichen Verteilung eines landwirtschaftlichen Ertrags das Berechnen einer landwirtschaftlichen Ertragskarte als Ausgabe aus dem Deep-Learning-Netzwerkmodell unter Verwendung der einen oder der mehreren Feldgesundheitsbildkarten, einer Bildserie der einen oder der mehreren Feldgesundheitsbildkarten und der Relativdaten der einen oder der mehreren Feldgesundheitsbildkarten als Eingabe umfasst.

11. System nach Anspruch 10, wobei die eine oder die mehreren Feldgesundheitsbildkarten mehrere Feldgesundheitsbildkarten umfassen, und wobei die Anweisungen dann, wenn sie durch den einen oder die mehreren Prozessoren ausgeführt werden, ferner eine Ausführung veranlassen, die das Kombinieren der mehreren Feldgesundheitsbildkarten in eine zusammengesetzte Feldgesundheitsbildkarte und das Erzeugen der räumlichen Verteilung des landwirtschaftlichen Ertrags unter Verwendung der zusammengesetzten Feldgesundheitsbildkarte umfasst.

**Revendications**

1. Procédé mis en œuvre par ordinateur comprenant les étapes suivantes :

recevoir, par un système informatique agricole, une ou plusieurs cartes d'imagerie de santé des champs pour un champ agronomique en question, les une ou plusieurs cartes d'imagerie de santé des champs comprenant des cartes spatiales de valeurs de l'index végétatif pour le champ agronomique indicatives d'une culture et dérivées de l'imagerie des champs agronomiques ; recevoir, au niveau du système informatique agricole, des données décrivant la masse totale récoltée de la culture sur le champ agronomique en question ; diviser le champ en un certain nombre d'emplacements ; calculer un rendement moyen par emplacement pour le champ agronomique en question sur la base de la division de la masse totale de culture récoltée par le nombre d'emplacements ; générer une distribution spatiale du rendement agronomique sur la base, au moins en partie, du rendement moyen par emplacement et sur une ou plusieurs cartes d'imagerie de santé des champs indicatives des valeurs de l'index végétatif par emplacement, où le rendement agronomique par emplacement est calculé selon l'équation :

$$y = \frac{Y \cdot x}{\bar{x}}$$

où Y est le rendement moyen, x est la valeur de l'index végétatif au niveau de l'emplacement, et $\bar{x}$ est la moyenne des valeurs de l'index végétatif à travers la carte d'imagerie de santé des champs ; générer une carte de rendement en utilisant la distribution spatiale du rendement agronomique ; et provoquer l'affichage de la carte de rendement sur un dispositif informatique du gestionnaire des champs ;

utiliser la carte de rendement comme entrée dans un modèle numérique de croissance des cultures ou d'un modèle numérique de rendement agronomique ; ou

utiliser la carte de rendement comme entrée dans un modèle numérique pour générer une prescription de plantation pour une année future.

2.  Procédé selon la revendication 1, dans lequel la génération de la carte de rendement comprend les étapes suivantes :

    sélectionner un type de traitement de base ;

    identifier une pluralité d'emplacements en tant qu'emplacements de base sur le champ agronomique qui a reçu le type de traitement de base ;

    recevoir des données de rendement de base comprenant des valeurs de rendement agronomique au niveau de chacun des emplacements de base ;

    utiliser les données de rendement de base, calculer un rendement moyen pour les emplacements de base ;

    utiliser la distribution spatiale du rendement agronomique et du rendement moyen pour la pluralité d'emplacements de base, calculer les valeurs de rendement de base pour une pluralité d'emplacements, qui sont des emplacements non de base sur le champ agronomique, et qui ont reçu un second type de traitement différent du type de traitement de base ; et

    générer la carte de rendement comprenant les valeurs de rendement agronomique au niveau des emplacements de base et les valeurs de rendement de base au niveau des emplacements non de base.

3.  Procédé selon la revendication 2, comprenant en outre les étapes suivantes :

    provoquer l'affichage, par l'intermédiaire d'une interface utilisateur graphique exécutée sur le dispositif informatique client, d'une pluralité de cartes d'imagerie de santé des champs et d'options de sélection d'une ou de plusieurs cartes parmi la pluralité de cartes d'imagerie de santé des champs ;

    recevoir une entrée sélectionnant les une ou plusieurs cartes d'imagerie de santé des champs et, en réponse, utiliser les une ou plusieurs cartes d'imagerie de santé des champs lors du calcul de la distribution spatiale du rendement agronomique ;

    provoquer l'affichage, par l'intermédiaire de l'interface utilisateur graphique s'exécutant sur le dispositif informatique client, d'une pluralité de zones de gestion sur les une ou plusieurs cartes d'imagerie de santé des champs ;

recevoir une entrée sélectionnant une zone de gestion particulière de la pluralité de zones de gestion et, en réponse, sélectionner un type de traitement de la zone de gestion particulière en tant que type de traitement de base.

4.  Procédé selon la revendication 1, comprenant en outre les étapes suivantes :

    recevoir des données décrivant les valeurs de rendement observées au niveau d'un ou de plusieurs emplacements en question du champ agronomique ;

    ajuster les valeurs de la carte de rendement de sorte que les valeurs correspondant aux un ou plusieurs emplacements en question soient plus proches des valeurs de rendement observées.

5.  Procédé selon la revendication 1, dans lequel les une ou plusieurs cartes d'imagerie de santé des champs comprennent une pluralité de cartes d'imagerie de santé des champs, le procédé comprenant en outre de combiner la pluralité de cartes d'imagerie de santé des champs en une carte composite d'imagerie de santé des champs et de générer la distribution spatiale du rendement agronomique à l'aide de la carte composite d'imagerie de santé des champs.

6.  Système informatique agricole comprenant :

    un ou plusieurs processeurs ;

    une mémoire stockant des instructions qui, lorsqu'elles sont exécutées par les un ou plusieurs processeurs,

    entraînent l'exécution des étapes suivantes :

    recevoir une ou plusieurs cartes d'imagerie de santé des champs pour un champ agronomique en question, les une ou plusieurs cartes d'imagerie de santé des champ comprenant des cartes spatiales de valeurs de l'index végétatif pour le champ agronomique indicatives d'une culture et dérivées de l'imagerie du champ agronomique ;

    recevoir des données décrivant la masse totale récoltée de la culture sur le champ agronomique en question ;

    diviser le champ en un certain nombre d'emplacements ;

    calculer un rendement moyen par emplacement pour le champ agronomique en question sur la base de la division de la masse totale de culture récoltée par le nombre d'emplacements ;

générer une distribution spatiale du rendement agronomique sur la base, au moins en partie, du rendement moyen par emplacement et sur une ou plusieurs cartes d'imagerie de santé des champs indicatives des valeurs de l'index végétatif par emplacement, où le rendement agronomique par emplacement est calculé selon l'équation :

$$y = \frac{Y \cdot x}{\bar{x}}$$

où Y est le rendement moyen, x est la valeur de l'index végétatif au niveau de l'emplacement, et $\bar{x}$ est la moyenne des valeurs de l'index végétatif à travers la carte d'imagerie de santé des champs ;

générer une carte de rendement en utilisant la distribution spatiale du rendement agronomique et provoquer l'affichage de la carte de rendement sur un dispositif informatique du gestionnaire du champ ;

utiliser la carte de rendement comme entrée dans un modèle numérique de croissance des cultures ou d'un modèle numérique de rendement agronomique ; ou

utiliser la carte de rendement comme entrée dans un modèle numérique pour générer une prescription de plantation pour une année future.

7. Système selon la revendication 6, dans lequel la génération de la carte de rendement comprend les étapes suivantes :

sélectionner un type de traitement de base ;
identifier une pluralité d'emplacements en tant qu'emplacements de base sur le champ agronomique qui a reçu le type de traitement de base ;
recevoir des données de rendement de base comprenant des valeurs de rendement agronomique au niveau de chacun des emplacements de base ;
utiliser les données de rendement de base, calculer un rendement moyen pour les emplacements de base ;
utiliser la distribution spatiale du rendement agronomique et du rendement moyen pour la pluralité d'emplacements de base, calculer les valeurs de rendement de base pour une pluralité d'emplacements, qui sont des emplacements non de base sur le champ agronomique, et qui ont reçu un second type de traitement différent du type de traitement de base ; et
générer la carte de rendement comprenant les valeurs de rendement agronomique au niveau des emplacements de base et les valeurs de rendement de base au niveau des emplacements non de base.

8. Système selon la revendication 7, dans lequel les instructions, lorsqu'elles sont exécutées par les un ou plusieurs processeurs, entraînent en outre l'exécution des étapes suivantes :

provoquer l'affichage, par l'intermédiaire d'une interface utilisateur graphique exécutée sur le dispositif informatique client, d'une pluralité de cartes d'imagerie de santé des champs et d'options de sélection d'une ou de plusieurs cartes parmi la pluralité de cartes d'imagerie de santé des champs ;
recevoir une entrée sélectionnant les une ou plusieurs cartes d'imagerie de santé des champs et, en réponse, utiliser les une ou plusieurs cartes d'imagerie de santé des champs lors du calcul de la distribution spatiale du rendement agronomique ;
provoquer l'affichage, par l'intermédiaire de l'interface utilisateur graphique s'exécutant sur le dispositif informatique client, d'une pluralité de zones de gestion sur les une ou plusieurs cartes d'imagerie de santé des champs ;
recevoir une entrée sélectionnant une zone de gestion particulière de la pluralité de zones de gestion et, en réponse, sélectionner un type de traitement de la zone de gestion particulière en tant que type de traitement de base.

9. Système selon la revendication 8, dans lequel les instructions, lorsqu'elles sont exécutées par un ou plusieurs processeurs, entraînent en outre l'exécution des étapes suivantes :

recevoir des données décrivant les valeurs de rendement observées au niveau d'un ou de plusieurs emplacements en question du champ agronomique ;
ajuster les valeurs de la carte de rendement de sorte que les valeurs correspondant aux un ou plusieurs emplacements en question soient plus proches des valeurs de rendement observées.

10. Système selon la revendication 9, dans lequel les instructions, lorsqu'elles sont exécutées par les un ou plusieurs processeurs, entraînent en outre l'exécution des étapes suivantes :

entraîner un modèle de réseau d'apprentissage profond utilisant des cartes d'imagerie de santé des champs passées, des données identifiant une bande d'image des cartes d'imagerie de santé des champs passées, et des données identifiant les dates relatives des cartes d'imagerie de santé des champs passées comme entrées et des cartes de rendement agronomique comme sorties ;

où la génération de la distribution spatiale du rendement agronomique comprend le calcul d'une carte de rendement agronomique de sortie à partir du modèle de réseau d'apprentissage profond en utilisant les une ou plusieurs cartes d'imagerie de santé des champs, une bande d'image des une ou plusieurs cartes d'imagerie de santé des champs et une date relative des une ou plusieurs cartes d'imagerie de santé des champs en tant qu'entrées.

11. Système selon la revendication 10, dans lequel les une ou plusieurs cartes d'imagerie de santé des champs comprennent une pluralité de cartes d'imagerie de santé des champs, où les instructions, lorsqu'elles sont exécutées par les un ou plusieurs processeurs, entraînent en outre l'exécution de la combinaison de la pluralité de cartes d'imagerie de santé des champs en une carte d'imagerie de santé des champs composite et la génération de la distribution spatiale du rendement agronomique à l'aide de la carte d'imagerie de santé des champs composite.

# Fig. 1

# Fig. 2

## (a)

**200** Mobile Computer Application

| 208 Seeds and Planting Instructions | 210 Nitrogen Instructions | 212 Weather Instructions | 214 Field Health Instructions | 216 Performance Instructions |

**206** Digital Map Book | **205** Script Generation Instructions

**204** Overview and Alert Instructions

**202** Account, Fields, Data Ingestion, Sharing Instructions

## (b)

**220** Cab Computer Application

| 222 Maps - Cab | 224 Remote View | 226 Data Collect and Transfer | 228 Machine Alerts | 230 Script Transfer |

**232** Scouting - Cab

# Fig. 3

```
┌─────────────────────────────────┐
│  Agronomic Data Preprocessing   │
│              305                │
└─────────────────────────────────┘
                │
                ▼
┌─────────────────────────────────┐
│  Agronomic Data Subset Selection│
│              310                │
└─────────────────────────────────┘
                │
                ▼
┌─────────────────────────────────┐
│   Agronomic Dataset Evaluation  │
│              315                │
└─────────────────────────────────┘
                │
                ▼
┌─────────────────────────────────┐
│    Agronomic Model Creation     │
│              320                │
└─────────────────────────────────┘
                │
                ▼
┌─────────────────────────────────┐
│     Storing Agronomic Model     │
│              325                │
└─────────────────────────────────┘
```

**Feedback Loop**

# Fig. 4

DISPLAY
412

INPUT DEVICE
414

CURSOR
CONTROL
416

MAIN
MEMORY
406

ROM
408

STORAGE
DEVICE
410

BUS
402

PROCESSOR
404

COMMUNICATION
INTERFACE
418

400

SERVER
430

INTERNET

ISP

428

426

NETWORK
LINK

420

LOCAL
NETWORK
422

HOST
424

EP 3 827 401 B1

Data Manager

Nitrogen | Planting | Practices | Soil

Fall applied (2 Fields) ●
Amount: 150 lbs N/ac
Applied: 1 x applications
[Edit] [Apply]

Fall manure (0 Fields) ●
Amount: 200 lbs N/ac
Applied: 3 x applications
[Edit] [Apply]

N Program 1 (0 Fields) ●
Amount: 150 lbs N/ac
Applied: 2 x applications
[Edit] [Apply]

Spring applied (4 Fields) ●
Amount: 150 lbs N/ac
Applied: 2 x applications
[Edit] [Apply]

Test program
Amount: 250
Applied: 2 x
[Edit]

☐ Select All

2015
Aug  Sept  Oct  Nov  Dec  Jan  Feb  Mar  Apr  May  Jun  Jul  Aug  Sept

☐ Ames, IA 1
● Corn | 100 | Boone, IA
150
Ⓝ
P
103 Surplus

☐ Austin, MN 1
● Corn | 100 | Fredricks, MN
150
Ⓝ
P
111 Surplus

☐ Boone, IN 1
● Corn | 100 | Boone, IA
130
Ⓝ
P
20 Surplus

☐ Champaign 1
● Corn | 100 | Champaign, IL
150
Ⓝ
80
Ⓝ
P
58 Surplus

☐ E Nebraska 1
● Corn | 100 | Burt, NE
100
Ⓝ
P
50
Ⓝ
107 Surplus

# FIG. 5

**Data Manager**

| Nitrogen | Planting | Practices | Soil |

---

**Planting 1(4 Fields)**
Crop Corn Product
Plant Date: 2016-04-12
ILU 112 | Pop: 34000
[ Edit ]  [ Apply ]

**Planting 2(0 Fields)**
Crop Corn Product
Plant Date: 2016-04-15
ILU 83 | Pop: 34000
[ Edit ]  [ Apply ]

**Planting 3(0 Fields)**
Crop Corn Product
Plant Date: 2016-04-13
ILU 83 | Pop: 34000
[ Edit ]  [ Apply ]

**Planting 4(1 Fields)**
Crop Corn Product
Plant Date: 2016-04-13
ILU 112 | Pop: 34000
[ Edit ]  [ Apply ]

+
Add New
Planting Plan

---

☐ Select All

| | CROP | PLANTED ACRES | PRODUCT | RELATIVE MATURITY | TARGET YIELD | POPULATION(AVG) | PLA |
|---|---|---|---|---|---|---|---|
| ☐ Ames, IA 1 <br> Corn \| 100 \| Boone, IA | Corn | — | DMC82-M | 112 | 160 | 34000 | Apr |
| ☐ Austin, MN 1 <br> Corn \| 100 \| Fredricks, MN | Corn | — | DMC82-M | 114 | 160 | 36000 | Apr |
| ☐ Boone, IN 1 <br> Corn \| 100 \| Boone, IA | Corn | — | DMC82-M | 112 | 150 | 34000 | Apr |
| ☐ Champaign 1 <br> Corn \| 100 \| Champaign, IL | Corn | — | | 112 | 200 | 34000 | Apr |
| ☐ E Nebraska 1 <br> Corn \| 100 \| Burt, NE | Corn | — | | 112 | 160 | 34000 | Apr |

*FIG. 6*

**702**
Receive Field Health Imagery Map for a Particular Agronomic Field

**704**
Receive Data Describing a Total Harvested Mass of a Crop on the Particular Agronomic Field

**706**
Compute an Average Yield for a Plurality of Locations on the Particular Agronomic Field

**708**
Using the Field Health Imagery Map, Generating a Spatial Distribution of Agronomic Yield Based, at Least in Part, on the Average Yield

**710**
Generate a Yield Map Using the Spatial Distribution of Agronomic Yield

**FIG. 7**

802 Select a Treatment Type as Base Treatment

804 Compute Average Yield for Locations with Base Treatment Type

806 Apply Average Yield of Base Treatment Locations to Other Treatment Locations

808 Generate Uniform Yield Map Assuming Uniform Treatment

FIG. 8

# FIG. 9

## REFERENCES CITED IN THE DESCRIPTION

### Patent documents cited in the description

- US 2016073573 A1
- US 2018027725 A1
- US 8738243 B
- US 20150094916 A
- US 831165
- US 8767194 B
- US 8712148 B
- US 62154207
- US 62175160
- US 62198060
- US 62220852